# EUROPÄISCHE PATENTSCHRIFT

(11) **EP 3 374 334 B1**
(45) Veröffentlichungstag und Bekanntmachung des Hinweises auf die Patenterteilung: **21.07.2021**
(21) Anmeldenummer: 16794361.2
(22) Anmeldetag: 11.11.2016
(51) Int. Cl.: C05D 3/02, C05D 9/02

(54) **DÜNGEMITTELMISCHUNG UND VERFAHREN ZU DEREN HERSTELLUNG**
FERTILISER MIXTURE AND METHOD FOR PRODUCTION THEREOF
MÉLANGE D'ENGRAIS ET PROCÉDÉ DE FABRICATION DE CELUI-CI

(30) Priorität: 11.11.2015 DE 102015119480
(43) Veröffentlichungstag der Anmeldung: 19.09.2018
(73) Patentinhaber: Fels-Werke GmbH, 38640 Goslar (DE)
(72) Erfinder: VERFÜRDEN, Martin, 38124 Braunschweig (DE)
(74) Vertreter: Hoffmann Eitle
(86) Internationale Anmeldenummer: PCT/EP2016/077451
(87) Internationale Veröffentlichungsnummer: WO 2017/081264

(56) Entgegenhaltungen:
- WO-A1-91/19541
- WO-A1-2015/173396
- DE-A1- 2 014 321
- US-B1- 6 413 291
- DATABASE WPI Week 199330 Thomson Scientific, London, GB; AN 1993-236758 XP002766175, & ES 2 036 949 A1 (TIOXIDE EURO SA) 1. Juni 1993 (1993-06-01)

## Beschreibung

### Technisches Gebiet

Die vorliegende Erfindung betrifft eine zumindest calciumcarbonat- und/oder (calcium)magnesiumcarbonat- und schwefelhaltige, rieselfähige, Düngemittelmischung sowie ein Verfahren zu deren Herstellung.

### Stand der Technik

Die zunehmende Intensivierung der Landwirtschaft, verbunden mit Intensivierung von mineralischer Düngung, führt an vielen Orten zu einer Absenkung des pH-Wertes im Boden. Wird ein Boden zu sauer, führt dies zu verschlechtertem Wachstum und geringeren Erträgen. Die Zugabe von Kalk oder Dolomit kann Säuren im Boden neutralisieren und führt zu einer Verbesserung der Nährstoffverfügbarkeit und Bodenstruktur. Daher werden zur Erhöhung des pH-Wertes des Bodens Materialien, die Oxide, Hydroxide oder Carbonate von Calcium und/oder Magnesium enthalten, in großen Mengen eingesetzt. Besonders häufig wird feiner Kalkstein oder Dolomit hierfür verwendet.

Ein Problem dabei ist, dass diese Materialien in sehr feingemahlener Form eingesetzt werden müssen, um eine ausreichend rasche Wirkung zu entfalten. Dies führt jedoch zu schwieriger Handhabung und dazu, dass diese Materialien stark stauben, was im Hinblick auf Arbeitsschutz (Staub-AGW), Kontamination der Umgebung sowie Verluste auf der Ackerfläche problematisch ist und somit die Ausbringung insbesondere bei Wind erheblich erschwert. Geeignete Maßnahmen zur Verringerung der Staubneigung von feingemahlenem Kalkstein oder Dolomit sind Granulation oder Befeuchtung mit Wasser oder wässrigen Lösungen, die Additive oder Bindemittel enthalten. Diese Maßnahmen erfordern einen zusätzlichen Verfahrensschritt und sind deshalb wirtschaftlich wenig attraktiv, weil den entsprechenden Kosten neben der Entstaubung keine weiteren Vorteile gegenüber stehen.

In der DE 37 38 938 A1 wird ein Granulat beschrieben, welches im Wesentlichen aus Gips (CaSO₄) und kohlensaurem Kalk (CaCO₃) besteht. Auf diese Weise wird neben einer Anhebung des pH-Werts zusätzlich Schwefel als essentieller Pflanzennährstoff ausgebracht, dessen Eintrag in den Boden aufgrund der zunehmenden Entschwefelung von Brennstoffen und Abluft in den letzten drei Jahrzehnten in vielen Gegenden signifikant abgenommen hat.

Dokumente US6413291B, DE2014321A und WO2015/173396A offenbaren ebengleich calciumcarbonathaltigen Düngergranulaten.

Schwefelmangel kann einen starken Einfluss auf Ertrag und Qualität von Nutzpflanzen haben. Die wichtigsten schwefelhaltigen Düngemittel sind Ammoniumsulfat (bzw. Düngemittel, welche Ammoniumsulfat enthalten wie z.B. Ammonsulfatsalpeter), Kaliumsulfat, Magnesiumsulfat, Calciumsulfat und elementarer Schwefel. Ammoniumsulfat und elementarer Schwefel führen zu ebenso wie die meisten N-haltigen Düngemittel zu einer Versauerung des Bodens. Bei elementarem Schwefel besteht zusätzlich das Problem der mangelhaften Bioverfügbarkeit aufgrund der sehr geringen Löslichkeit.

### Zusammenfassung der Erfindung

Aufgabe der vorliegenden Erfindung ist die Bereitstellung eines einfachen, schnellen und kostengünstigen Verfahrens zur Herstellung einer möglichst staubarmen und gleichzeitig reaktiven, zumindest calciumcarbonat- und/oder (calcium)magnesiumcarbonat- und schwefelhaltigen, rieselfähigen, Düngemittelmischung. Die Düngemittelmischung soll eine pH-Regulierung des zu düngenden Bodens ermöglichen und den Schwefel in für Pflanzen verfügbarer Form bereitstellen.

Weitere Aufgabe ist die Bereitstellung einer derartigen Düngemittelmischung. Diese Aufgaben werden durch eine, rieselfähige bzw. körnige, Düngemittelmischung bzw. Düngemitteltrockenmischung gemäß Anspruch 1 sowie durch ein Verfahren gemäß einem der Ansprüche 6 bis 10 gelöst.

Die Erfindung stellt daher eine rieselfähige bzw. körnige Düngemittelmischung bereit, welche Calcium- und/oder Magnesiumcarbonat, Schwefel verbindungen und Eisenhydroxid- und/oder Eisenoxihydroxidverbindungen, enthält, die dadurch gekennzeichnet ist, dass
der Neutralisationswert (als CaO) der Düngemittelmischung mindestens 20 beträgt, und
die Düngemittelmischung bezogen auf ihre durch Trocknung bei 50°C auf Gewichtskonstanz, mindestens aber für 24 h, bestimmte Trockenmasse
   a) einen Aluminiumgehalt von < 3,6 Gew.-%, (gerechnet als Al₂O₃) und
   b) einen Fe-Gehalt von 0,2 bis 9 Gew.-% aufweist, und
   c) wobei der Schwefel zumindest teilweise in Sulfatform vorliegt.

Die Erfindung stellt zudem ein Verfahren zur Herstellung einer Düngemittelmischung bereit, wobei die die folgenden Komponenten a) und b), ggf. c) und/oder d) gemischt werden:
a) einer CaCO₃ und/oder CaMg(CO₃)₂ enthaltenden, körnigen Feststoffkomponente, die einen Aluminiumgehalt von < 4 Gew.-%, (gerechnet als Al₂O₃) bezogen auf die Trockenmasse (bestimmt durch Trocknung bei 105 °C) aufweist,
b) einer wasserlösliches Eisensalz, insbesondere Eisensulfat, enthaltenden Komponente,
c) gegebenenfalls Zugabewasser, und
d) gegebenenfalls weiterer flüssiger Komponenten und/oder körniger Feststoffkomponenten,
   wobei die Mischung bezogen auf ihre durch Trocknung bei 50°C auf Gewichtskonstanz, mindestens aber für 24 h bestimmte Trockenmasse einen Gehalt an (Ca/Mg)CO₃ von ≥ 20 Gew.-% aufweist.

Vorteilhafte Weiterbildungen der Erfindung sind in den sich jeweils anschließenden Unteransprüchen gekennzeichnet

### Abbildungen

**Abbildung 1****:** Anteil der Feinpartikel <90 µm als Kenngröße für das Staubverhalten von feingemahlenem Kalksteinmehl, welches mit Grünsalz bzw. Gips (feuchter Filterkuchen mit 18 Gew.-% H₂O) als Additiv vermischt wurde; Prozentangaben [Gew.-%] bezeichnen den Anteil des Additivs in der erhaltenen Mischung
**Abbildung 2****:** Anteil der Grobpartikel (>1 mm bzw. >2 mm bzw.- >4 mm) von feingemahlenem Kalksteinmehl, welches mit Grünsalz vermischt wurde; Prozentangaben bezeichnen den Anteil an Grünsalz in der erhaltenen Mischung
**Abbildung 3****:** Einfluss der Temperatur des Kalksteinmehls (CaCO₃) bei Mischung mit Grünsalz auf Fein- und Grobanteile, Anteile in Gew.-%
**Abbildung 4****:** Feinanteile von Kalksteinmehl, welches 30 Sekunden gemeinsam mit Grünsalz gemahlen wurde; Prozentangaben [Gew.-%] bezeichnen den Anteil von Grünsalz in der erhaltenen Mischung
**Abbildung 5****:** Grobanteile von Kalksteinmehl, welches gemeinsam mit Grünsalz gemahlen wurde; Prozentangaben [Gew.-%] bezeichnen den Anteil von Grünsalz in der erhaltenen Mischung
**Abbildung 6****:** Anteil [Gew.-%] der Feinpartikel <90 µm, in Relation zum Anteil [Gew.-%] an a) Grünsalz, b) Gips (feuchter Filterkuchen mit 18 Gew.-% H₂O) und c) mit 20 [Gew.-%] Gips und 20 [Gew.-%] Grünsalz

### Detaillierte Beschreibung der Erfindung

### Ausgangsstoffe

Die Erfindung stellt ein Verfahren zur Herstellung einer Düngemittelmischungdurch Mischen folgender Komponenten bereit, wobei die Ausgangsmischung bezogen auf ihre durch Trocknung bei 50°C auf Gewichtskonstanz, mindestens aber für 24 h bestimmte Trockenmasse einen Gehalt an (Ca/Mg)CO₃ von ≥ 20 Gew.-% aufweist:
a) einer CaCO₃ und/oder CaMg(CO₃)₂ enthaltenden, körnigen Feststoffkomponente, die einen Aluminiumgehalt von < 4 Gew.-%, (gerechnet als Al₂O₃) bezogen auf die Trockenmasse (bestimmt durch Trocknung bei 105 °C) aufweist,
b) einer wasserlösliches Eisensalz, insbesondere Eisensulfat, enthaltenden Komponente,
c) gegebenenfalls Zugabewasser, und
d) gegebenenfalls weiterer flüssiger Komponenten und/oder körniger Feststoffkomponenten,

Bei der CaCO₃ und/oder CaMg(CO₃)₂ enthaltenden Feststoffkomponente handelt es sich vorzugsweise um natürliches Kalksteinmehl oder natürliches Dolomitmehl oder Kreide oder gefälltes Calciumcarbonat (PCC) oder gefälltes Calciummagnesiumcarbonat oder eine Mischung aus mehreren der vorgenannten Materialien. Natürliches Kalksteinmehl und/oder natürliches Dolomitmehl werden aus Kostengründen bevorzugt.

Für die körnige CaCO₃ und/oder CaMg(CO₃)₂ enthaltende Feststoffkomponente, insbesondere das Kalksteinmehl und/oder Dolomitmehl, ist zudem eine hohe Feinheit vorteilhaft, um die Reaktion zu beschleunigen. Im Rahmen der Erfindung wird unter einem Mehl eine lose Schüttung verstanden, welche bei Nasssiebung gemäß DIN EN 12948:2011 einen Siebrückstand auf einem 250 µm-Sieb < 2 Gew.-% aufweist. Vorzugsweise weist die CaCO₃ und/oder CaMg(CO₃)₂ enthaltende Feststoffkomponente einen Siebrückstand nach DIN EN 12948:2011 bei Nasssiebung auf einem 63 µm-Sieb < 50 Gew.-%, bevorzugt < 30 Gew.-%, besonders bevorzugt < 15 Gew.-% auf. Das heißt, die körnige CaCO₃ und/oder CaMg(CO₃)₂ enthaltende Feststoffkomponente weist Primärpartikel auf, welche überwiegend eine Korngröße von <63 µm aufweisen. Dabei kann die CaCO₃ und/oder CaMg(CO₃)₂ enthaltende Feststoffkomponente zumindest teilweise aber auch grobkörniger vorliegen und Körner aufweisen, welche aus agglomerierten Primärpartikeln bestehen, wobei die Agglomerate beim Mischen mechanisch zerkleinert werden. Beispielsweise werden vorzugsweise Filterkuchen aus der Kammerfilterpresse verwendet.

Des Weiteren weist die CaCO₃ und/oder CaMg(CO₃)₂ enthaltende Feststoffkomponente gemäß einem weiteren, eigenständigen Aspekt der Erfindung einen geringen Aluminiumgehalt auf. Aufgrund der toxischen Eigenschaften des Aluminiums für Pflanzen (Hemmung des Wurzelwachstums durch Al(OH)₂⁺) wird erfindungsgemäß eine CaCO₃ und/oder CaMg(CO₃)₂ enthaltende Feststoffkomponente verwendet, die einen Aluminiumgehalt, bestimmt durch Flammen-Atomabsorptionsspektrometrie (F-AAS), von < 4 Gew.-%, bevorzugt < 2 Gew.-%, besonders bevorzugt < 1 Gew.-% (gerechnet als Al₂O₃) aufweist.

Sofern im Rahmen der Anmeldung Bezug genommen wird auf die Trockenmasse der Ausgangsmischung oder der Düngemittelmischung wird diese durch Trocknung bei 50 °C auf Gewichtskonstanz mindestens aber für 24 h bestimmt. Ausgangsmischung bezeichnet erfindungsgemäß die Mischung der Komponenten a) und b), ggf. c) und/oder d), vor der chemischen Umsetzung der Komponenten bzw. die zu vermischende Zusammensetzung vor der Mischung.

Des Weiteren weist die CaCO₃ und/oder CaMg(CO₃)₂ enthaltende Feststoffkomponente bezogen auf ihre Trockenmasse vorzugsweise einen titrimetrisch nach DIN EN 12945:2014 Verfahren A bestimmten Gehalt an (Ca/Mg)CO₃ von > 80 Gew.-%, bevorzugt > 90 Gew.-% auf.

Die Mischung, die durch Mischen der Komponenten a) bis d) erhalten wird, weist einen bezogen auf ihre Trockenmasse bestimmten Gehalt an (Ca/Mg)CO₃ von ≥ 20 Gew.-%, bevorzugt ≥ 30 Gew.-%, insbesondere bevorzugt ≥ 50 Gew.-% auf. Dieser Gehalt kann titrimetrisch nach DIN EN 12945:2014 Verfahren A bestimmt werden. Eine alternative Bestimmungsmethode ist die DIN EN 12485:2010, Abschn. 6.9.

Bei der wasserlösliches Eisensalz enthaltenden Komponente handelt es sich vorzugsweise um reines FeSO₄ oder ein Material, welches FeSO₄ enthält. Der Vorteil von FeSO₄ ist, dass dieses zusätzlich den wichtigen Pflanzennährstoffs Schwefel mit sich bringt. Das FeSO₄ enthält in der Regel Kristallwasser, bevorzugt in Form von Fe(II)SO₄-Heptahydrat (=Grünsalz) oder Fe(II)SO₄-Monohydrat. Bei dem Fe(II)SO₄-Monohydrat kann es sich um thermisch getrocknetes Hepthydrat handeln, es kann sich aber auch um ein Monohydrat handeln, welches bei der Aufkonzentrierung von Gebrauchtschwefelsäure, z.B. Dünnsäure bei der Titandioxidherstellung, erhalten wird. Es kann auch vorteilhaft sein, eine Mischung von wasserlöslichen Eisensalzen mit unterschiedlichem Gehalt an Kristallwasser (z.B. Fe(II)SO₄-Heptahydrat und Fe(II)SO₄-Monohydrat) zur Steuerung des Wassergehaltes der Ausgangsmischung und der Restfeuchte der Düngemittelmischung zu verwenden. Infolgedessen kann bei Verwendung von ausreichend Fe(II)SO₄-Heptahydrat auf die Zugabe von Wasser in die Ausgangsmischung verzichtet werden, was die Verfahrensführung erheblich vereinfacht.

Vorzugsweise handelt es sich bei der wasserlösliches Eisensalz enthaltenden Komponente zumindest teilweise, vorzugsweise ausschließlich, um Grünsalz, welches beim Sulfatverfahren zur Herstellung von Titandioxid durch Kristallisation gewonnen und abgetrennt wird. Dieses Grünsalz weist nur geringe Anteile an Aluminium und unerwünschten Schwermetallen auf und enthält neben Mg zusätzlich wertvolle Mikronährstoffe wie z.B. Mangan und Zink. Der Gehalt an Mangan beträgt vorzugsweise > 100 ppm und der an Zink > 15 ppm. Der Gehalt an Eisen beträgt vorzugsweise > 17 %. Die Gehalte an Mangan und Eisen wurden durch Flammen-Atomabsorptionsspektrometrie (F-AAS) bestimmt. Der Gehalt an Zink wurde durch Optische Emissionsspektrometrie mit induktiv gekoppeltem Plasma (ICP-OES) bestimmt.

Im Rahmen der Erfindung wurde festgestellt, dass bereits ein geringer Anteil an Grünsalz bezogen auf die Trockenmasse der Ausgangsmischung (1 Gew.-%) entsprechend einem Fe-Gehalt im Produkt von etwa 0,2 Gew.-% eine merkliche Verringerung des Feinanteils in den erhaltenen Zubereitungen bewirkt, ohne dass größere Mengen Grobanteile entstehen. Oberhalb von 30 Gew.-% Grünsalzanteil in den Ausgangsmischungen bewirken zusätzliche Mengen noch eine moderate Verringerung der Staubneigung, jedoch nimmt die Homogenität der Mischung deutlich ab und es steigt der Anteil an Grobprodukt deutlich an. Somit liegt der Gehalt an Grünsalz bezogen auf die Trockenmasse der Ausgangsmischung vorzugsweise bei 5 bis 50 Gew.-%, bevorzugt 10 bis 30 Gew.-%.

Infolgedessen handelt es sich allgemein bei der CaCO₃ und/oder CaMg(CO₃)₂ enthaltende Feststoffkomponente und der das Eisensalz enthaltenden (Feststoff)komponente um die beiden Hauptkomponenten der Mischung, die in Summe > 50 Gew.-% der Ausgangsmischung bezogen auf die Trockenmasse der Ausgangsmischung ausmachen.

Bevorzugt enthält das wasserlösliche Eisensalz mindestens 23 Gew.-% Wasser, bevorzugt 30 bis 60 Gew.-%, besonders bevorzugt 40 bis 55 Gew.-% in Form von Kristallwasser und/oder adsorptiv, also physikalisch gebundenem Wasser.

Die Zugabemenge der wasserlösliches Eisensalz enthaltenden (Feststoff)komponente wird zudem vorzugsweise so gewählt, dass der Neutralisationswert (als CaO) (bestimmt gemäß DIN EN 12945:2014 Verfahren A) der erfindungsgemäßen Düngemittelmischung mindestens 20, bevorzugt mindestens 35, wie z.B. mindestens 42, besonders bevorzugt mindestens 45, insbesondere bevorzugt 45 bis 56, beträgt.

Um die erfindungsgemäße, homogene Kornverteilung zu erhalten, kommt es dabei nicht nur auf den Gehalt an der Eisensalz-(Feststoff)komponente an, sondern auch auf die Restfeuchte der fertigen Düngemittelmischung. Denn ein gewisser Anteil des Wassers wird für die Reaktion des wasserlöslichen Eisensalzes und die Ausbildung von Eisenverbindungen, insbesondere von Eisenoxiden oder Eisenhydroxiden, und anderer Reaktionsprodukte verbraucht. Der Rest des Wassers verbleibt als freies, physikalisch gebundenes Wasser in der Düngemittelmischung. Infolgedessen wird eine nichtstaubende und homogene Düngemittelmischung ohne größere Anteile an Grobprodukt nur dann erzielt, wenn der gesamte Wassergehalt (Kristallwasser und physikalisch gebundenes Wasser sowie gegebenenfalls Zugabewasser) der Ausgangsmischung dahingehend eingestellt wird, dass die frisch erhaltene Düngemittelmischung eine optimale und nicht zu hohe Restfeuchte aufweist. Denn eine zu hohe Restfeuchte führt zu Verklumpungen. Vorzugsweise weist die Düngemittelmischung direkt nach dem Mischen eine Restfeuchte zwischen 1,5 und 16 Gew.-%, bevorzugt zwischen 2 und 13 Gew.-%, besonders bevorzugt zwischen 3 und 9 Gew.-%, bestimmt bei 105°C nach DIN EN 12048:1996 auf. Dies ist der Fall, wenn wie in Beispiel 1 verfahren wird.

Die Restfeuchte der erfindungsgemäßen Düngemittelmischung kann dabei auch durch Verdampfen des Wassers während des Mischens eingestellt werden. Zudem hängt sie auch von der Art und Menge der anderen Komponenten der Ausgangsmischung ab.

Zusammenfassend kann die Restfeuchte der erfindungsgemäßen Düngemittelmischung somit insbesondere durch Wahl der Art und Menge des wasserlöslichen Eisensalzes und der anderen Komponenten der Ausgangsmischung und/oder durch Zugabe von Wasser und/oder durch Verdampfen während des Mischens eingestellt werden. In einer bevorzugten Ausgestaltung wird das Wasser der Ausgangsmischung wie bereits erläutert ausschließlich in Form von Kristallwasser und in Form von physikalisch gebundener bzw. anhaftender Feuchtigkeit zugegeben und nicht als Zugabewasser. Auf diese Weise entfällt die Handhabung und Dosierung von Flüssigkeiten.

Im Rahmen der Erfindung liegt es dabei auch, dass die Ausgangsmischung weitere Komponenten enthält. Vorzugsweise beträgt der Anteil an weiteren Komponenten bezogen auf die Trockenmasse der Ausgangsmischung < 50 Gew.-%, bevorzugt < 40 Gew.-%.

Insbesondere kann zur Mischung eine Feststoffkomponente zugegeben werden, welche CaSO₄ enthält, um den Schwefelgehalt zu erhöhen ohne den pH-Wert abzusenken. Besonders geeignet ist REA-Gips und/oder ein REA-Gips enthaltendes Material.

Des Weiteren können z.B. Bor, Molybdän und Kupfer zugegeben werden.

Ist ein hoher Gehalt an Schwefel gewünscht, kann dies durch Zugabe von Elementarschwefel erreicht werden. Auf diese Weise können Düngemittelmischungen erhalten werden, bei denen der Schwefel sowohl in elementarer Form als auch als Sulfat vorliegt. Damit liegt der Schwefel sowohl in rasch verfügbarer Form als auch mit Langzeitwirkung vor. Auch ist es möglich, dass das wasserlösliche Eisensalz keinen Schwefel enthält, z.B. FeCl₂ oder FeCl₃. Insbesondere in diesem Fall kann der Schwefel beispielsweise mittels CaSO₄ und/oder als Elementarschwefel zugeführt werden.

Interessant ist auch eine Verwendung von eisenchloridhaltigen Nebenprodukten z.B. aus der TiO2-Herstellung nach dem Chloridprozess oder aus der Stahlbeize als Eisenkomponente. Die Nebenprodukte aus der TiO2-Herstellung nach dem Chloridprozess entstehen bei der Chlorierung von titanhaltigen Rohstoffen.

Auch können eisenchloridhaltige Materialien Verwendung finden, welche bei der Aufbereitung titanhaltiger Rohstoffe zu synthetischem Rutil als Nebenprodukte anfallen.

Neben Eisen können diese Materialien weitere Mikronährstoffe wie z.B. Mangan, Zink, Kupfer, Molybdän und/oder Bor enthalten. Um den Gehalt unerwünschter Begleitelemente wie z.B. Chrom zu verringern, können diese eisenchloridhaltigen Materialien zunächst gereinigt werden. Dies kann durch Kristallisation oder durch eine Ausfällung und anschließende Abtrennung der unerwünschten Komponenten erfolgen.

Die Zugabe der schwefelhaltigen Verbindungen wie beispielsweise Elementarschwefel oder Calciumsulfat kann dabei bevorzugt bei der Vermischung der Fe-Komponente mit der Ca- oder Mg-Komponente erfolgen.

### Verfahrensführung

Im Rahmen der Erfindung wurde überraschenderweise herausgefunden, dass es möglich ist, aus einer Ausgangsmischung, welche zumindest eine CaCO₃ und/oder CaMg(CO₃)₂ enthaltende, körnige, insbesondere mehlförmige, Feststoffkomponente und eine ggf. körnige und/oder flüssige, wasserlösliches Eisensalz, bevorzugt Eisensulfat, enthaltende (Feststoff)komponente, enthält, eine homogene, staubfreie Düngemittelmischung bzw. Düngemittelschüttung herzustellen und zwar ausschließlich durch Mischen der einzelnen Ausgangsstoffe, das heißt ohne eine aufwendige und gezielte Kompaktierung oder Granulierung und gegebenenfalls anschließende mechanische Zerkleinerung. Es wird also keine zusätzliche Verdichtungsenergie aufgebracht. Körnig im Sinne dieser Anmeldung meint dabei, dass es sich um ein aus einzelnen, losen Körnern bestehende Schüttung handelt. Rieselfähige Düngemittelmischung bzw. Düngemitteltrockenmischung meint im Rahmen der Erfindung eine Mischung, welche als lose, also rieselfähige, Schüttung vorliegt. Die einzelnen Körner der Mischung können dabei jeweils einen Feuchtegehalt in Form von physikalisch gebundenem, insbesondere adsorptiv gebundenem, Wasser aufweisen.

Die Eigenschaften der erfindungsgemäßen Düngemittelmischung sind, wie bereits erläutert, nicht nur von Art und Menge der Edukte, sondern auch von der Verfahrensführung abhängig.

Die Beeinflussung der Kornverteilung kann z. B. einerseits über die Feinheit des verwendeten Ausgangsmaterials (insbesondere des Kalksteinmehls und/oder Dolomitmehls), die Mischverhältnisse und den Wassergehalt, andererseits aber auch durch die Mischdauer und Intensität, die Reaktionsgeschwindigkeit (z.B. Erhöhung der Reaktionsgeschwindigkeit durch Zusatz von Säure oder CaO), oder eine gemeinsame Vermahlung, und/oder durch Sichtung, Siebung und Rückführung erfolgen. Letzteres ist allerdings aufgrund des damit verbundenen Aufwands nicht unbedingt angestrebt.

Wie bereits erläutert, kann durch Mischen bei höheren Temperaturen ein Teil des sich in der Mischung befindlichen Wassers verdampfen. Auch durch eine teilweise Trocknung, z.B. durch thermische Nachbehandlung, oder durch chemische Umsetzung mit CaO oder MgO kann die Restfeuchte in der Düngemittelmischung reduziert werden. Der Wassergehalt kann durch Zusatz von Wasser oder wasserhaltigen Materialien wie beispielsweise REA-Gips in Form eines Filterkuchens zur Ausgangsmischung herbeigeführt werden. Auch durch Verwendung von Eisensalzen mit unterschiedlichem Wassergehalt, z.B. Eisensulfat-Monohydrat und -Heptahydrat kann, wie bereits erläutert, der Wassergehalt gezielt beeinflusst werden.

Im Rahmen der Erfindung wurde außerdem festgestellt, dass eine Mischung durch zumindest teilweise gemeinsame Vermahlung von Feststoffkomponenten sehr vorteilhaft ist. Dies ist somit ein ebenfalls eigenständig erfinderischer Aspekt. Bei der gemeinsamen Vermahlung der Eisensalz-Feststoffkomponente mit der CaCO₃ und/oder CaMg(CO₃)₂ enthaltenden Feststoffkomponente, insbesondere dem Kalksteinmehl und/oder Dolomitmehl, wird die reaktive Oberfläche der einzelnen Partikel erhöht, so dass die Reaktion beschleunigt wird. Auch wird durch den intensiven Kontakt der Reaktionspartner die Reaktionszeit deutlich verkürzt. Außerdem beschleunigt auch die beim Vermahlen entstehende Wärme die Reaktion.

Wie bereits erläutert, kann zur Erhöhung des Schwefelgehalts auch elementarer Schwefel zugegeben werden. Wird dieser gemeinsam mit der CaCO₃ und/oder CaMg(CO₃)₂ enthaltenden Feststoffkomponente, insbesondere dem Kalksteinmehl und/oder Dolomitmehl, vermahlen, wird eine sehr geringe Partikelgröße des Schwefels erreicht und damit die spätere Reaktivität im Boden deutlich erhöht.

Des Weiteren kann auch Gips in die Mahlung gegeben werden, um die Lösungskinetik durch dessen Zerkleinerung zu verbessern. Ist eine langsamere Lösungskinetik erwünscht, wird Gips nicht mit Vermahlen, sondern erst danach zugemischt.

Insbesondere wenn ein hoher Gehalt an Schwefel gewünscht ist, wird vorzugsweise elementarer Schwefel und/oder Calciumsulfat mit Kalksteinmehl oder Dolomitmehl intensiv vermahlen, um eine möglichst hohe Feinteiligkeit und Reaktivität des Schwefels zu erreichen. Am Ende oder im Anschluss an die intensive Mahlung wird dann Eisensulfat als wasserlösliches Eisensalz zugegeben, um die Staubneigung der erhaltenen Zusammensetzung zu verringern.

Vorzugsweise erfolgt die Zugabe der Eisensalz-Feststoffkomponente zur Verringerung der Staubneigung grundsätzlich erst am Ende der Mahlung, um noch eine ausreichende Menge an Feuchtigkeit im Produkt zu behalten.

Die spezifische Ausgestaltungsform der Zugabe der Eisensalz-Feststoffkomponente und/oder Gips und/oder elementarem Schwefel zur Vermahlung der CaCO₃ und/oder CaMg(CO₃)₂ enthaltenden Feststoffkomponente, insbesondere dem Kalksteinmehl und/oder Dolomitmehl, zeigt zusätzlich folgende Vorteile: Erhöhung des S-Gehaltes ohne Verringerung des Neutralisationswerts, Depotwirkung des elementaren Schwefels, da er vor Umwandlung zu Sulfat nicht ausgewaschen werden kann, aufgrund der Mahlung eine erhöhte Reaktivität des elementaren Schwefels, sehr feinkörniges Produkt ohne die übliche Staubneigung derartiger Produkte.

Im Rahmen der Erfindung wurde außerdem festgestellt, dass es vorteilhaft sein kann, das Mischen in zumindest zwei Schritten mit einer dazwischen liegenden Ruhephase durchzuführen, auch wenn nicht gemeinsam Vermahlen wird.

Denn die chemische Umsetzung beim Mischen der Eisensalz-Komponente mit der CaCO₃ und/oder CaMg(CO₃)₂ enthaltenden Feststoffkomponente, insbesondere dem Kalksteinmehl und/oder Dolomitmehl, verläuft bei Raumtemperatur nicht spontan vollständig ab, sondern kann über einen Zeitraum von mehreren Stunden bis Tagen verlaufen. In der Regel ist die Reaktion nach rund 24 h abgeschlossen. Trotz der Nachreaktionen nach Beendigung des Mischvorgangs, bleibt die Kornverteilung der Düngemittelmischung allerdings im wesentlichen erhalten. In diesem Fall ist es dann vorteilhaft, die erhaltene Düngemittelmischung nach einiger Zeit (z.B. nach 8 oder 24 Stunden) erneut zu durchmischen.

Außerdem ist es deshalb vorteilhaft, das Mischen der CaCO₃ und/oder CaMg(CO₃)₂ enthaltenden Feststoffkomponente, insbesondere des Kalksteinmehls und/oder des Dolomitmehls, mit den anderen Komponenten in mindestens zwei Schritten vorzunehmen, um die chemische Umsetzung möglichst vollständig durchzuführen, wobei zwischen den jeweiligen Mischschritten mindestens 2 Stunden, bevorzugt 4 bis 24 Stunden liegen.

Unabhängig von der Reaktion der (sauren) Eisenverbindung mit dem alkalischen CaCO3-haltigen Material findet im Anschluss eine Oxidation von Fe(II) zu Fe(III) statt, was sich in einer deutlichen Verfärbung hin zu gelb, ocker oder braun (je nach Fe-Gehalt) bemerkbar macht. In geschlossenen Behältnissen (Luftauschluss) findet diese Oxidation dagegen nur sehr langsam statt.

Vorzugsweise erfolgt das Mischen, insbesondere auch das Vermahlen, der Komponenten in einem kontinuierlichen Verfahren. Alternativ kann das Verfahren auch diskontinuierlich ein- oder mehrstufig durchgeführt werden.

Grundsätzlich kann zudem auch eine Abtrennung und Rückführung von Feinstanteilen und Grobanteilen erfolgen, auch wenn diese vorzugsweise nicht erfolgt.

Im Rahmen der Erfindung wurde außerdem festgestellt, dass es vorteilhaft ist, die Temperatur der Mischung beim Mischen zu erhöhen. Insbesondere beträgt die Temperatur (im Innern der Mischung) vorzugsweise >55°C, bevorzugt 60 bis 120°C, besonders bevorzugt 70 bis 90°C. Durch die Temperaturerhöhung wird die Freisetzung des Kristallwassers von Eisen(II)sulfat-Heptahydrat und damit die Umsetzung beschleunigt.

Die Temperaturerhöhung kann vorzugsweise dadurch bewirkt werden, dass die CaCO₃ und/oder CaMg(CO₃)₂ enthaltende Feststoffkomponente, insbesondere das Kalksteinmehl und/oder das Dolomitmehl, vor dem Mischvorgang auf eine Temperatur von >60°C, bevorzugt 75 bis 150°C, besonders bevorzugt 90 bis 130°C, gebracht wird. Insbesondere kann dies erfolgen, indem die Ca-CO₃ und/oder CaMg(CO₃)₂ enthaltende Feststoffkomponente, insbesondere das Kalksteinmehl und/oder das Dolomitmehl, direkt im Anschluss an ihre Vermahlung oder Mahl-Trocknung mit den anderen Komponenten vermischt wird.

Das Mischen der Komponenten der Mischung bzw. Ausgangsmischung kann in mehreren Schritten erfolgen, wobei vorzugsweise die Eisensalz enthaltende Feststoffkomponente zunächst mit einem ersten Anteil der CaCO₃ und/oder CaMg(CO₃)₂ enthaltenden Feststoffkomponente vermischt wird bis die Reaktion anspringt und anschließend mit dem Rest der CaCO₃ und/oder CaMg(CO₃)₂ enthaltenden Feststoffkomponente und gegebenenfalls den weiteren Komponenten vermischt wird.

Eine Erhöhung der Reaktionstemperatur führt in der Regel neben einer weiteren Verringerung der Staubneigung vor allem zu einer starken Verringerung des Grobanteils, insbesondere des Anteils >4 mm.

Besonders vorteilhaft ist es Eisenverbindungen, z.B. Eisensulfate zu verwenden, welche für andere Anwendungen nicht oder nur eingeschränkt verwendbar sind (sogenannte offspec-Ware). Beispielsweise können dies Eisenverbindungen sein, die entweder einen erhöhten Anteil an Säure (z.B. in Form von Haftsäure) enthalten oder die stark agglomeriert oder verbacken sind.

Während der erhöhte Anteil an Säure, wie er beispielsweise bei Problemen während der Filtration oder Zentrifugation von Eisensalzen vorkommen kann, bei den meisten Verwendungen sehr unerwünscht ist, stellt er für die erfindungsgemäße Verwendung keinerlei Problem dar.

Während stark agglomerierte oder verbackene Eisensalze, die insbesondere längerer Lagerung oder Temperaturschwankungen während der Lagerung von Eisensulfaten entstehen können, bei den meisten Verwendungen sehr unerwünscht sind, sind diese für die erfindungsgemäße Verwendung durchaus verwendbar, insbesondere bei intensiver Vermischung mit den Ca- oder Mg-Verbindungen oder wenn der Mischprozess bei höheren Temperaturen durchgeführt wird und die agglomerierten Eisensalze ihr Kristallwasser verlieren.

Vorteilhaft kann auch sein Eisensulfate zu verwenden, welche aufgrund eines zu hohen Zink-Gehalts für andere Anwendungen nicht oder nur eingeschränkt verwendbar sind (sogenannte offspec-Ware). Da in der Regel erhebliche Kosten für Zink-arme Schrottqualitäten anfallen, die Reduktion der Schwarzlösung bei der Titandioxidherstellung verwendet werden, kann sogar gezielt Eisenschrott mit einem höheren Anteil an Zink bei der TiO2-Herstellung verwendet werden. Dies führt nicht nur zu einer Kostenersparnis bei der TiO2-Herstellung, sondern zusätzlich zur Verbesserung der Düngemittelmischungen, die mittels solcher Eisensulfate hergestellt, werden.

### Chemische Zusammensetzung des Düngemittels

Die Erfindung stellt somit rieselfähige bzw. körnige Düngemittelmischung bereit, welche Calcium- und/oder Magnesiumcarbonat, Schwefel verbindungen und Eisenhydroxid- und/oder Eisenoxihydroxidverbindungen, enthält,
**dadurch gekennzeichnet, dass**
der Neutralisationswert (als CaO) der Düngemittelmischung mindestens 20 beträgt, und
die Düngemittelmischung bezogen auf ihre durch Trocknung bei 50°C auf Gewichtskonstanz, mindestens aber für 24 h, bestimmte Trockenmasse
   a) einen Aluminiumgehalt von < 3,6 Gew.-%, (gerechnet als Al₂O₃) und
   b) einen Fe-Gehalt von 0,2 bis 9 Gew.-% aufweist und
   c) wobei der Schwefel zumindest teilweise in Sulfatform vorliegt.

Die Hauptprodukte des erfindungsgemäßen Verfahrens sind somit neben dem in den Edukten enthaltenen, unreagierten Calciumcarbonat und/oder Calciummagnesiumcarbonat, wasserlösliche Sulfate, wie z.B. Calciumsulfat und/oder Magnesiumsulfat, Eisenhydroxide bzw. Eisenoxihydroxide. Die erhaltenen sehr feindispersiven Eisenverbindungen erfüllen dabei insbesondere zwei wichtige Funktionen:
Sie binden sehr effektiv die Fein- und Feinstpartikel, insbesondere bestehend aus Ca- und/oder Mg-Verbindungen, und führen dadurch zu der erfindungsgemäßen Verringerung der Staubbildung. Da die Bindung der Fein- und Feinstpartikel nicht primär auf der Bindung durch physikalisch gebundenes Wasser beruht, bleibt selbst bei Verlust von Feuchtigkeit bzw. nach Trocknung die Bindung der Fein- und Feinstpartikel und damit eine deutlich verringerte Staubneigung erhalten.

Des Weiteren speichern die Eisenhydroxide bzw. Eisenoxihydroxide, das Wasser chemisch oder physikalisch, so dass auch dadurch die Austrocknung verhindert oder verringert wird.

Der Neutralisationswert (als CaO) (bestimmt gemäß DIN EN 12945:2014 Verfahren A) der erfindungsgemäßen Düngemittelmischung beträgt mindestens 20, bevorzugt mindestens 35, wie z.B. mindestens 42, besonders bevorzugt mindestens 45, insbesondere bevorzugt 45 bis 56.

Der Aluminiumgehalt, bestimmt durch Flammen-Atomabsorptionsspektrometrie (F-AAS), beträgt < 3,6 Gew.-%, bevorzugt < 1,8 Gew.-%, besonders bevorzugt < 0,8 Gew.-% (gerechnet als Al₂O₃) der erfindungsgemäßen Düngemittelmischung, bezogen auf die Trockenmasse der Düngemittelmischung.

Zudem weist die Düngemittelmischung, bezogen auf ihre Trockenmasse, insbesondere in Kombination mit dem oben genannten erfindungsgemäßen Al-Gehalt, erfindungsgemäß einen Fe-Gehalt bestimmt durch Flammen-Atomabsorptionsspektrometrie (F-AAS) von 0,2 bis 9 Gew.-%, bevorzugt 0,6 bis 6 Gew.-%, besonders bevorzugt 1 bis 4 Gew.-%, auf.

Erfindungsgemäß weist die Düngemittelmischung jeweils bezogen auf ihre Trockenmasse einen S-Gehalt von vorzugsweise 0,5 bis 20 Gew.-%, insbesondere bevorzugt 1 bis 15 Gew.-%, besonders bevorzugt 1 bis 4 Gew.-%, bestimmt mittels Infrarot-Spektroskopie gemäß DIN EN 459/2-2010 auf. Dabei kann ein Teil des S-Gehaltes in Form von Elementarschwefel zugegeben werden, erfindungswesentlich ist aber, dass zumindest ein Teil des Schwefels in Form von wasserlöslichem Sulfat wie z.B.CaSO4 oder MgSO4 vorliegt.

Die erfindungsgemäße Düngemittelmischung weist vorzugsweise einen bezogen auf ihre Trockenmasse bestimmten Gehalt an (Ca/Mg)CO₃ von ≥ 15 Gew.-%, bevorzugt ≥ 25 Gew.-%, insbesondere bevorzugt ≥ 45 Gew.-% auf. Dieser Gehalt kann titrimetrisch nach DIN EN 12945:2014 Verfahren A bestimmt werden. Eine alternative Bestimmungsmethode ist die DIN EN 12485:2010, Abschn. 6.9. Dabei beschreibt der Gehalt an (Ca/Mg)CO3 in der Düngemittelmischung den Anteil des eingesetzten (Ca/Mg)CO3, der nicht mit den (sauren) Eisenverbindungen abreagiert ist und somit in der Düngemittelmischung in carbonatischer Form und nicht beispielsweise als CaSO4 vorliegt. Erfindungsgemäß liegt somit regelmäßig ein erheblicher Anteil des Ca oder Mg in der Düngemittelmischung in carbonatischer und damit alkalisch wirkender Form vor.

### Korngrößenverteilung des erfindungsgemäßen Düngemittels

Es wurde insbesondere erfindungsgemäß herausgefunden, dass aus den vorgenannten Komponenten durch Mischen eine Düngemittelmischung hergestellt werden kann, die eine deutlich verringerte Staubneigung aufweist. Messwerte zur Charakterisierung des Staubverhaltens direkt nach Beendigung des Mischvorgangs, also ohne vorherige Trocknung, sind folgende Siebdurchgänge bestimmt durch Trockensiebung gemäß DIN EN 12948:2011 mit einer Siebzeit von 3 Minuten aufweist:

| **Korngröße** | **Anteile [Gew.-%]** | | |
|---|---|---|---|
| | | vorzugsweise | besonders bevorzugt |
| < 0,09 mm | <85 | 15 bis 70 | 15 bis 60 |
| 0,09 bis < 1 mm | 10 bis 100 | 20 bis 55 | 30 bis 55 |
| 1 bis < 8 mm | <25 | 4 bis 30 | 8 bis 30 |
| > 8 mm | <5 | 0 bis 5 | 0 bis 2 |

Die dazu gehörenden Messwerte sind in Beispiel 1 dargestellt.

Die erfindungsgemäße Düngemittelmischung weist also einen deutlich verringerten Anteil an der Kornfraktion < 90 µm auf. Sie ist somit staubarm. Gleichzeitig ist der Anteil an der Kornfraktion 0,09 bis < 1 mm relativ hoch und der Anteil an Grobkorn > 1 mm ist gering. Dadurch ist die Kornverteilung der erfindungsgemäßen Düngemittelmischung sehr homogen.

Im Rahmen der Erfindung wurde dabei festgestellt, dass die erfindungsgemäße Düngemittelmischung auch nach Trocknung ihre vorteilhafte Kornverteilung im Wesentlichen behält.

Die erfindungsgemäße Kornverteilung resultiert dabei insbesondere aus den Reaktionen der Ausgangsstoffe miteinander während des Mischens und gegebenenfalls auch noch danach. Folgende chemische Reaktionsgleichungen sind dabei insbesondere relevant:

FeSO₄ + CaCO₃ + H₂O => Fe(OH)₂ + CaSO₄ + CO₂

4 Fe(OH)₂ + O₂ => 4 FeOOH + 2 H₂O

FeOOH + H₂O => Fe(OH)₃

Die obigen Reaktionsgleichungen sind selbstverständlich nur vereinfachte Darstellungen beruhend auf theoretischen Annahmen. MgCO₃ reagiert analog zu CaCO₃. Es wird angenommen, dass letztendlich in der fertigen Düngemittelmischung Reaktionsprodukte der Art (Fe(II)/Fe(III))Ox · y H₂O sowie CaSO4 und unreagierte Ausgangsstoffe vorliegen.

### Anwendung des erfindungsgemäßen Düngemittels

Die erfindungsgemäße Düngemittelmischung eignet sich besonders zur Düngung von Kulturen mit hohem Schwefelbedarf, z.B. Luzerne, Raps, Kohl und Kohlgewächse, Zwiebeln, Knoblauch, Baumwolle, Klee, Gräser, Weizen, Gerste, Mais, Sonnenblumen, Soja, Bohnen, Hirse, Hafer oder Triticale. Dabei werden während einer Vegetationsperiode beispielsweise insgesamt 10 bis 250 kg S/ha, bevorzugt 20 bis 150 kg S/ha, besonders bevorzugt 30 bis 100 kg S/ha, ausgebracht. Vorzugsweise erfolgt die Ausbringung der erfindungsgemäßen Düngemittelmischung vor der Aussaat, besonders bevorzugt im Herbst.

Besonders vorteilhaft ist, dass bei Anwendung der erfindungsgemäßen Düngemittelmischung die Verwendung von anderen S-haltigen Düngemitteln reduziert oder ganz gestrichen werden kann. Insbesondere kann auf S-haltige Düngemittel wie SSA (Ammoniumsulfat) oder ASS (Ammonsulfatsalpeter) ganz oder weitgehend verzichtet werden. Stattdessen kann bevorzugt KAS (Kalkammonsalpeter) oder Harnstoff als N-Dünger verwendet werden. Dies bedeutet eine erhebliche Kostenersparnis.

Außerdem ist es bei Verwendung der erfindungsgemäßen Düngemittelmischung möglich Kalium bzw. Magnesium zumindest teilweise in Form von Kaliumchlorid bzw. Magnesiumchlorid anstelle von Kaliumsulfat bzw. Magnesiumsulfat zu verwenden, was deutliche Kostenvorteile ermöglicht.

Deshalb wird ein Verfahren bevorzugt, bei dem während einer Vegetationsperiode die erfindungsgemäße Düngemittelmischung zusammen mit N-Düngemitteln, deren S/N-Verhältnis <0,2, bevorzugt <0,05 beträgt, verwendet wird. Beispielsweise kann für Kulturen, die mit der erfindungsgemäßen Düngemittelmischung gedüngt wurden, KAS oder Harnstoff als N-Dünger verwendet werden.

Die Erfindung stellt zudem ein Verfahren zum Düngen mit Schwefel mittels einer erfindungsgemäßen Düngemittelmischung bereit, die dadurch gekennzeichnet ist, dass der Anteil an Schwefel (als S) aus der Düngemittelmischung im Verhältnis zur gesamten Schwefelgabe (als S) für die so gedüngten Kulturen über eine Vegetationsperiode mindestens 30%, bevorzugt mindestens 50%, besonders bevorzugt mindestens 75%, beträgt.

Ein besonderer Vorteil der erfindungsgemäßen Düngemittelmischung ist eine Steigerung des Ertrags im Vergleich zu einer konventionellen Gabe von Ca-CO3 und einem S-haltigen Stickstoffdüngemittel (s. Beispiel 6). Möglicherweise liegt dies an der frühzeitigen Schwefelversorgung im Herbst und/oder an den Spurenelementen in der erfindungsgemäßen Düngemittelmischung.

Entsprechend eignet sich die erfindungsgemäße Düngemittelmischung durch die damit verbundene Schwefelversorgung auch ganz grundsätzlich zur Verbesserung der Stickstoffaufnahme von Pflanzen und einer Reduzierung von Nitrateinträgen ins Grundwasser - insbesondere bei der Ausbringung von Wirtschaftsdünger.

Im Folgenden wird die Erfindung anhand von Ausführungsbeispielen erläutert. Die in den Ausführungsbeispielen angegebenen Gehalte an Aluminium, Eisen und Mangan wurden jeweils durch Flammen-Atomabsorptionsspektrometrie (F-AAS) bestimmt. Gehalte an Zink wurden durch Optische Emissionsspektrometrie mit induktiv gekoppeltem Plasma (ICP-OES) bestimmt. Gehalte an Calcium- und Magnesiumcarbonat wurden titrimetrisch nach DIN EN 12945:2014 Verfahren A bestimmt. Eine alternative Bestimmungsmethode ist die DIN EN 12485-2010, Abschn. 6.9.

### Beispiel 1: Herstellung einer staubarmen Düngemittelmischung durch Mischen von Kalksteinmehl mit Grünsalz

Feingemahlenes Kalksteinmehl (KSM 60/3 der Fels-Werke GmbH in Goslar, Deutschland, mit einem Gehalt an (Ca/Mg)CO₃ von 98 Gew.-%, einem Al₂O₃-Gehalt von 0,3 Gew.-%, einem Siebrückstand von 4,0 Gew.-% auf einem 90 µm-Sieb und von 12 Gew.-% auf einem 63 µm-Sieb) wurde mit Grünsalz (GS) (mit einem Fe-Gehalt von 18 Gew.-%, einem Mn-Gehalt von 0,06 Gew.-% und einem Zn-Gehalt von 0,014 Gew.-%) eine Minute in einem Labor-Mörtelmischer (Hobart, 140 U/min) in unterschiedlichen Mischungsverhältnissen gemischt (siehe Tabelle 1). Dabei nahm die Mischung eine bräunliche Farbe an.

Für alle Mischungen wurden durch eine Trockensiebung die unterschiedlichen Kornfraktionen charakterisiert (siehe Tabelle 1).

Die Siebung erfolgte in Anlehnung an DIN EN 12948:2011 nach Verfahren A (trocken, mechanische Siebmaschine). Dabei erfolgte die Verwendung eines Siebsatzes mit Nennweiten nach DIN ISO 565-1998 und Prüfsiebgewebe nach DIN ISO 3310-1-2001 in den Hauptgrößen 8 / 4 / 2 / 1 / 0,090 mm sowie den Ergänzungsgrößen 0,630 / 0,200 mm. Die Durchführung erfolgte nach DIN EN 12948:2011 bei mittlerer Schwingungsfrequenz. Die verwendete Siebmaschine und die verwendeten Siebe stammten von der Firma Haver&Boecker.

In Abweichungen von der Norm wurde allerdings Verfahren A ohne Vortrocknung ausgeführt, obwohl es sich um feuchte Mischungen handelte. Außerdem betrug die Siebzeit 3 min statt 10 min. Dies gilt für alle Beispiele, da ansonsten die Gefahr besteht, dass die Körner mechanisch durch das Sieben zerkleinert werden.

Das Staubverhalten der erhaltenen Mischungen wurde visuell sowie quantitativ durch den Anteil der Kornfraktion <90 µm charakterisiert: Je kleiner der Massenanteil der Kornfraktion <90 µm, desto geringer ist die Staubneigung der Mischung.

**Tabelle 1: Siebanalyse von feingemahlenem Kalksteinmehl (KSM), welches mit Grünsalz (GS) vermischt wurde; alle Zahlenwerte in der Tabelle sind Gew.%**

| Anteil KSM/ Gew.-% | Anteil GS/ Gew.-% | Fe-Gehalt/ Gew.-% | < 0,09 mm | 0,09 -0,2 mm | 0,2 -0,63 mm | 0,63 -1 mm | 1 -2 mm | 2 -4 mm | 4 -8 mm | > 8 mm |
|---|---|---|---|---|---|---|---|---|---|---|
| 100 | 0 | 0 | 96 | 3,9 | 0,1 | 0 | 0 | 0 | 0 | 0 |
| 99 | 1 | 0,18 | 93,22 | 5,30 | 1,02 | 0,13 | 0,21 | 0,13 | 0,00 | 0,00 |
| 98 | 2 | 0,36 | 92,32 | 5,17 | 0,68 | 0,59 | 0,85 | 0,38 | 0,00 | 0,00 |
| 97 | 3 | 0,54 | 90,06 | 5,02 | 1,83 | 1,14 | 1,40 | 0,55 | 0,00 | 0,00 |
| 95 | 5 | 0,9 | 82,46 | 8,23 | 3,33 | 2,80 | 2,47 | 0,70 | 0,00 | 0,00 |
| 90 | 10 | 1,8 | 65,67 | 14,13 | 9,92 | 3,70 | 4,25 | 1,93 | 0,41 | 0,00 |
| 80 | 20 | 3,6 | 58,16 | 10,57 | 15,68 | 5,45 | 5,75 | 3,36 | 1,03 | 0,00 |
| 70 | 30 | 5,4 | 34,17 | 16,21 | 24,70 | 5,13 | 7,59 | 6,71 | 4,74 | 0,76 |
| 60 | 40 | 7,2 | 28,32 | 16,10 | 21,44 | 5,03 | 7,79 | 8,26 | 8,12 | 4,94 |
| 50 | 50 | 9 | 25,18 | 19,53 | 17,30 | 4,52 | 7,62 | 9,59 | 10,87 | 5,39 |
| 40 | 60 | 10,8 | 17,00 | 23,80 | 16,62 | 4,26 | 6,51 | 8,74 | 12,46 | 10,60 |

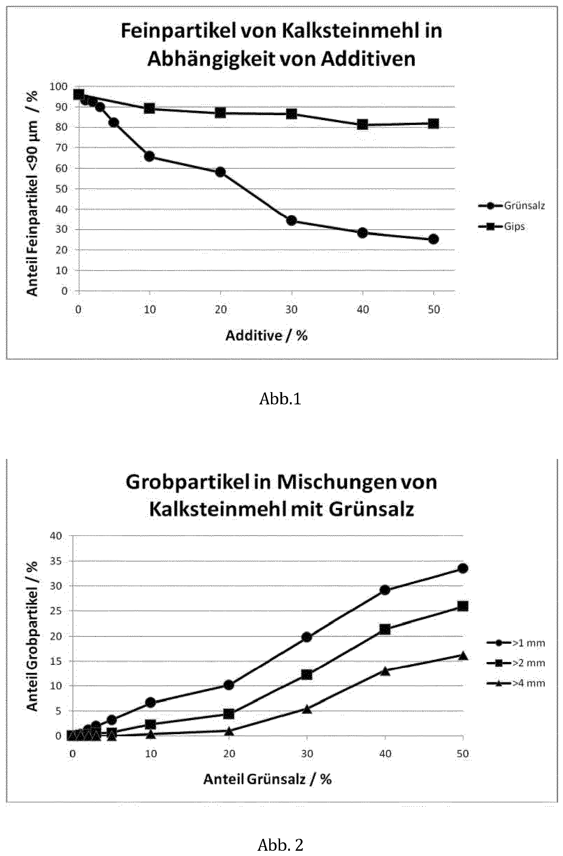

In Abbildung 1 ist der Masseanteil <90 µm für die erhaltenen Produkte aufgetragen. Es zeigt sich, dass das Staubverhalten des feingemahlenen Kalksteinmehls durch Zusatz von Grünsalz erheblich verbessert wird. Bereits Mischungen, die 1 bis 5 Gew.-% an Grünsalz enthalten, zeigen ein verbessertes Staubverhalten. Ab 10 Gew.-% an Grünsalz ist die Verbesserung erheblich.

Im Vergleich dazu zeigt feuchter REA-Gips (18 Gew.-% Feuchtegehalt) als Zusatz zu gemahlenem Kalksteinmehl nur einen deutlich schwächeren Effekt auf das Staubverhalten bzw. den Anteil an Feinanteilen <90 µm (s. Abb. 1). Zur effektiven Eliminierung von Staub eignet sich REA-Gips im untersuchten Konzentrationsbereich demnach nicht.

Weiterhin wurde für alle Mischungen die Homogenität durch Bestimmung des Grobanteils (> 1 mm / >2 mm / >4 mm) quantifiziert (Abbildung 2): Je kleiner der Massenanteil der Kornfraktion > 1 mm bzw. >2 mm bzw. >4 mm, desto homogener und vorteilhafter ist die Zusammensetzung der Mischung. Die Mischungen mit einem Anteil an Grünsalz bis 20 Gew.-% sind recht homogen, d.h. sie weisen keine größeren Anteile an Grobmaterial und Verklumpungen auf wie aus Abbildung 2 entnommen werden kann. Die Mischung mit einem Anteil an 30 Gew.-% Grünsalz ist auch noch verwendbar, darüber hinaus liegende Anteile an Grünsalz führen jedoch zu nicht mehr akzeptablen Grobanteilen, die abgetrennt werden müssen. Mischungen, die 10, 20 und 30 Gew.-% an Grünsalz enthalten, sind besonders staubarm und enthalten wenig Grobanteile, d.h. diese Zubereitungen weisen besonders vorteilhafte Eigenschaften auf.

Des Weiteren wurde die Restfeuchte der Mischungen nach DIN EN 12048:1996 mittels einer infrarot beheizten Trockenwaage vom Typ Sartorius MA30 der Firma Sartorius AG, Göttingen, D, bestimmt. Etwa 5 g des zu prüfenden Pulvers wurden in eine Aluminiumschale gegeben. Die Trockenwaage zeigte direkt den Gewichtsverlust durch das bei 105°C verdampfte Wasser in Prozent an.

Die Restfeuchte nach dem Mischprozess betrug:
- Kalksteinmehl mit 10 Gew.-% Grünsalzanteil: 3,7 Gew.-% (2,3 Gew.-% ***)
- Kalksteinmehl mit 20 Gew.-% Grünsalzanteil: 8,6 Gew.-% (4,4Gew.-% ***)
- Kalksteinmehl mit 30 Gew.-% Grünsalzanteil: 13,1 Gew.-% (5,8 Gew.-% ***)
   *** = nach 5 Tagen an Luft bei Raumtemperatur

Sehr deutlich trat der positive Effekt des wasserlöslichen Eisensalzes auch in Erscheinung nach Trocknung der Mischungen über mehrere Tage durch Kontakt mit Umgebungsluft bei Raumtemperatur:
Mischungen des Kalksteinmehls mit Grünsalz verloren nur langsam an Feuchte, nach 5 Tagen war noch ca. die Hälfte der Feuchte gebunden. Das Staubverhalten änderte sich nur wenig und blieb gering (nur eine geringe Zunahme der Feinanteile <90 µm).

Mischungen des Kalksteinmehls mit Gips verloren auch nur langsam an Feuchte, nach 5 Tagen war auch noch der größte Teil der Feuchte gebunden. Das Staubverhalten änderte sich nur wenig und blieb hoch.

Mit Wasser angemischtes Kalksteinmehl trocknete in 24 h hingegen vollständig aus und die Staubneigung stieg stark an.

Der Effekt des wasserlöslichen Eisensalzes besteht also zum einen in einer Reduzierung der Staubneigung durch Binden der Feinstanteile durch die entstandenen Eisenhydroxide, zum anderen aber auch in einer Retention der Feuchte über einen längeren Zeitraum und damit einer Langzeitwirkung hinsichtlich der Reduzierung der Staubneigung.

### Beispiel 2: Herstellung einer staubarmen Düngemittelmischung durch Mischen von 120°C warmem Kalksteinmehl mit Grünsalz

80 Teile feingemahlenes Kalksteinmehl (KSM 60/3 der Fels-Werke GmbH in Goslar, Deutschland, mit einem Gehalt an (Ca/Mg)CO₃ von 98 Gew.-%, einem Al₂O₃-Gehalt von 0,3 Gew.-%, einem Siebrest von 4,0 Gew.-% auf einem 90 µm-Sieb und von 12 Gew.-% auf einem 63 µm-Sieb) wurde mit 20 Teilen Grünsalz (GS) (mit einem Fe-Gehalt von 18 Gew.-%, einem Mn-Gehalt von 0,06 Gew.-% und einem Zn-Gehalt von 0,014 Gew.-%) eine Minute in einem Labor-Mörtelmischer (Hobart, 140 U/min) gemischt.

Dabei wurde das Kalksteinmehl vor dem Mischen auf 120°C temperiert. Als Referenzversuch wurde dasselbe Mischungsverhältnis ohne die Temperierung des Kalksteinmehls (d.h. Kalksteinmehl bei Raumtemperatur (RT)) untersucht.

Für beide Mischungen wurden durch eine Trockensiebung die unterschiedlichen Kornfraktionen charakterisiert (siehe Tabelle 2). Die Siebung wurde analog zu Beispiel 1 durchgeführt.

**Tabelle 2: Siebanalyse von feingemahlenem Kalksteinmehl, welches mit Grünsalz vermischt wurde, bei zwei verschiedenen Temperaturen; alle Zahlenwerte in der Tabelle sind Gew.%**

| T (KSM) | Fe-Gehalt /Gew.-% | < 0,09 mm | 0,09 -0,2 mm | 0,2 -0,63 mm | 0,63 -1 mm | 1 -2 mm | 2 -4 mm | 4 -8 mm | > 8 mm |
|---|---|---|---|---|---|---|---|---|---|
| RT | 3,6 | 58,16 | 10,57 | 15,68 | 5,45 | 5,75 | 3,36 | 1,03 | 0,00 |
| 120°C | 3,6 | 32,99 | 10,30 | 24,27 | 15,56 | 12,52 | 2,70 | 1,66 | 0,00 |

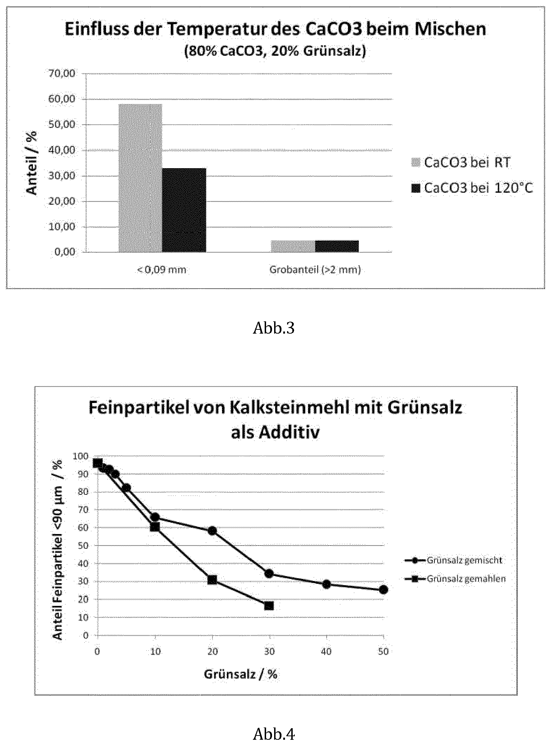

Die Gegenüberstellung zeigt, dass die Temperierung des Kalksteinmehls zu einer deutlichen Verringerung der Feinanteile und damit der Staubneigung führt. Das Staubverhalten der erhaltenen Produkte wird quantitativ durch den Anteil der Kornfraktion <90 µm charakterisiert: Je kleiner der Massenanteil der Kornfraktion <90 µm, desto geringer ist die Staubneigung des Produkts. Die Menge der Grobanteile wird durch die Temperierung nicht beeinflusst (siehe Abbildung 3).

Die Restfeuchte der Mischungen wurde wie in Beispiel 1 bestimmt. Die Restfeuchte 24 h nach dem Mischen unterscheidet sich kaum:
- Kalksteinmehl (RT) mit 20 Gew.-% Grünsalzanteil gemischt:
   5,9 Gew.-%
- Kalksteinmehl (120°C) mit 20 Gew.-% Grünsalzanteil gemischt:
   5,6 Gew.-%

### Beispiel 3: Herstellung einer staubarmen Düngemittelmischung durch gemeinsame Mahlung von Grünsalz und Kalksteinmehl

Feingemahlenes Kalksteinmehl (KSM 60/3 der Fels-Werke GmbH in Goslar, Deutschland, mit einem Gehalt an (Ca/Mg)CO₃ von 98 Gew.-%, einem Al₂O₃-Gehalt von 0,3 Gew.-%, einem Siebrest von 4,0 Gew.-% auf einem 90 µm-Sieb und von 12 Gew.-% auf einem 63 µm-Sieb) wurde mit Grünsalz (mit einem Fe-Gehalt von 18 Gew.-%, einem Mn-Gehalt von 0,06 Gew.-% und einem Zn-Gehalt von 0,014 Gew.-%) 30 Sekunden in einer Scheibenschwingmühle (Siebtechnik TS 750, 0,55 kW, Mahlgefäß Chromstahl) in unterschiedlichen Mischungsverhältnissen gemahlen.

Für alle Produkte wurden sofort nach dem Vermahlen durch eine Trockensiebung die unterschiedlichen Kornfraktionen charakterisiert (siehe Tabelle 3). Die Siebung wurde wie in Beispiel 1 beschrieben durchgeführt.

Das Staubverhalten der erhaltenen Produkte wurde visuell sowie quantitativ durch den Anteil der Kornfraktion <90 µm charakterisiert: Je kleiner der Massenanteil der Kornfraktion <90 µm, desto geringer ist die Staubneigung der Mischung.

**Tabelle 3: Siebanalyse von Kalksteinmehl (KSM), welches gemeinsam mit Grünsalz (GS) vermahlen wurde; alle Zahlenwerte in der Tabelle sind Gew.-%**

| Anteil KSM Gew.-% | Anteil GS Gew.-% | < 0,09 mm | 0,09 - 0,2 mm | 0,2 - 0,63 mm | 0,63 - 1 mm | 1 - 2 mm | 2 -4mm | 4 - 8 mm | > 8 mm |
|---|---|---|---|---|---|---|---|---|---|
| 100 | 0 | 96 | 3,9 | 0,1 | 0 | 0 | 0 | 0 | 0 |
| 90 | 10 | 60,31 | 14,20 | 16,99 | 5,20 | 1,27 | 1,35 | 0,68 | 0,00 |
| 80 | 20 | 30,69 | 9,78 | 12,72 | 9,66 | 8,86 | 11,88 | 12,80 | 3,61 |
| 70 | 30 | 16,69 | 6,81 | 10,09 | 13,28 | 21,69 | 17,19 | 11,64 | 2,61 |

In Abbildung 4 ist der Masseanteil [Gew.-%] <90 µm für die erhaltenen Produkte in Relation zum Gehalt an Grünsalz [Gew.-%] aufgetragen.

Es zeigte sich, dass das Staubverhalten des Kalksteinmehls durch gemeinsame Mahlung mit Grünsalz erheblich verbessert wird.

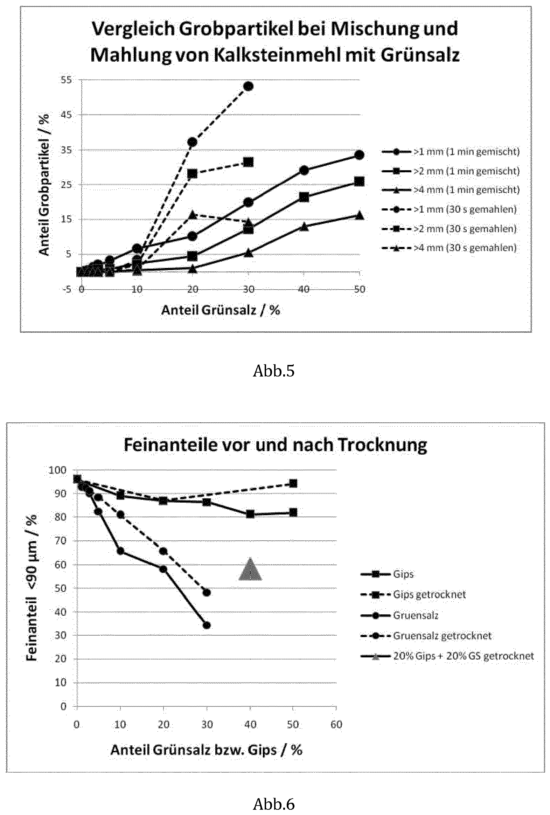

Weiterhin wurde für alle Produkte die Homogenität durch Bestimmung des Grobanteils (> 1 mm / >2 mm / >4 mm) quantifiziert (Abbildung 5). Je kleiner der Massenanteil der Kornfraktion > 1 mm bzw. >2 mm bzw. >4 mm ist, desto homogener und vorteilhafter ist die Zusammensetzung der Mischung.

Das Produkt mit einem Anteil an Grünsalz von 10 Gew.-% hat eine geringe Staubneigung und ist recht homogen, d.h. es weist keine größeren Anteile an Grobmaterial und Verklumpungen auf, wie aus Abbildung 5 entnommen werden kann. Produkte mit einem Anteil an Grünsalz von 20 Gew.-% oder mehr führen jedoch zu mehr Grobanteilen, die gegebenenfalls abgetrennt werden müssen.

Der Effekt von Grünsalz auf das Staubverhalten tritt bei gemeinsamer Vermahlung mit Kalksteinmehl stärker zu Tage als bei der Vermischung der beiden Komponenten.

Der Feuchtegehalt der frisch gemahlenen Düngemittelmischungen (bestimmt bei 105°C nach DIN EN 12048:1996) betrug:
- Kalksteinmehl mit 10 Gew.-% Grünsalzanteil: 3,5 Gew.-%
- Kalksteinmehl mit 20 Gew.-% Grünsalzanteil: 7 Gew.-%

### Beispiel 4: Vergleich der Wirkung von Gips-Filterkuchen und Grünsalz sowie Einfluss von Trocknung

Feingemahlenes Kalksteinmehl (KSM 60/3 der Fels-Werke GmbH in Goslar, Deutschland, mit einem Gehalt an (Ca/Mg)CO₃ von 98 Gew.-%, einem Al₂O₃-Gehalt von 0,3 Gew.-%, einem Siebrückstand von 4,0 Gew.-% auf einem 90 µm-Sieb und von 12 Gew.-% auf einem 63 µm-Sieb) wurde zum einen mit einem Filterkuchen von REA-Gips mit einer Restfeuchte von 18 Gew.-% und zum anderen mit Grünsalz (mit einem Fe-Gehalt von 18 Gew.-%, einem Mn-Gehalt von 0,06 Gew.-% und einem Zn-Gehalt von 0,014 Gew.-%) eine Minute in einem Labor-Mörtelmischer (Hobart, 140 U/min) in unterschiedlichen Mischungsverhältnissen gemischt.

Diese Mischungen wurden nach Trocknung (Trockenschrank, 105 °C, bis zur Gewichtskonstanz, mindestens aber 24 h) erneut einer Siebanalyse unterzogen.

Für alle Mischungen wurden durch eine Trockensiebung die unterschiedlichen Kornfraktionen in derselben Weise wie in Beispiel 1 charakterisiert. Die Ergebnisse sind in Abbildung 6 dargestellt.

In Abbildung 6 stellen die durchgezogene Linien die Siebanalyse der frisch präparierten Mischungen und die gestrichelten Linien die Siebanalyse der getrockneten Mischungen (Trockenschrank, 105 °C, bis zur Gewichtskonstanz, mindestens aber 24 h) dar.

Die Mischungen mit Gips und mit Grünsalz wurden bereits in Beispiel 1 dargestellt und erläutert (Abbildung 1). Nach Trocknung zeigte sich in allen Fällen ein Anstieg des Feinanteils. Bei Gips als Zusatz stieg der bereits sehr hohe Feinanteil noch weiter an, so dass ein Zusatz von Gips weder in einer frischen Mischung noch nach Trocknung eine akzeptable Lösung darstellt.

Bei Grünsalz als Zusatz trat bei Trocknung zwar ein Anstieg des Feinanteils auf, die Werte blieben jedoch weit unterhalb des Wertes für reines Kalksteinmehl, so dass ein Zusatz von Grünsalz auch nach Trocknung eine starke Verringerung des Feinanteils bewirkt. Damit wird deutlich, dass die Wirkung des Grünsalzes nicht primär durch die Feuchtigkeit bewirkt wird, sondern durch die als Reaktionsprodukte gebildeten Eisenverbindungen.

Die auf diese Weise erhältliche Düngemittelmischung zeigt sowohl in frisch gemischtem Zustand als auch in getrocknetem (= gealtertem) Zustand eine geringe Staubneigung, und weist somit eine sehr gute Lagerfähigkeit auf.

Die Kombination von Grünsalz und Gips zeigte, dass das Staubverhalten der Zubereitung durch die Wirkung des Grünsalzes geprägt wird. Grünsalz vermag also auch Kalksteinmehl mit Gipszusätzen wirksam zu entstauben.

Vorteil des erfindungsgemäßen Verfahrens bzw. der dadurch hergestellten erfindungsgemäßen Düngemittelmischung ist somit zum einen die hohe Reaktivität der fein gemahlenen CaCO₃ und/oder CaMg(CO₃)₂-Feststoffkomponente, insbesondere des Kalksteinmehls und/oder Dolomitmehls. Dabei ist die Staubneigung deutlich geringer als bei herkömmlichem gemahlenem Kalksteinmehl, da die Fein- und Feinstpartikel in die Matrix aus Eisenverbindungen eingebettet sind. Insbesondere ist die Staubneigung auch nach längerer Lagerung und Trocknung deutlich verringert.

Die erfindungsgemäß hergestellte, calcium- und/oder magnesium, eisen- und schwefelhaltige Düngemittelmischung weist zudem eine homogene Zusammensetzung ohne größere Anteile an Grobmaterial auf. Dies wird durch das aus dem Stand der Technik bekannte Befeuchten mit Wasser oder die Verwendung eines feuchten Filterkuchens von REA-Gips nicht erreicht. Denn bei Befeuchtung mit Wasser entstehen sehr rasch und in erheblicher Menge Grobpartikel (>4 mm) und Klumpen, da dieser Mischprozess sehr instabil ist.

Bei der erfindungsgemäßen Düngemittelmischung handelt es sich somit um ein alkalisches Kalk-Schwefel-Düngemittel, welches Schwefel in löslicher Form und einen Teil des Calciums in löslicher Form enthält.

Besonders vorteilhaft ist auch, dass die erfindungsgemäße Düngemittelmischung sowohl einen gewissen Anteil an Körnern < 0,09 mm als auch den Anteil von 0,09 bis 1 mm aufweist. Denn durch den Feinstkornanteil wird eine hohe Reaktivität gewährleistet. Die gröberen Körner gewährleisten dagegen, dass die erfindungsgemäße Düngemittelmischung nicht so schnell ausgewaschen wird.

Da auch die gröberen Körner der erfindungsgemäßen Düngemittelmischung nicht durch zusätzliche mechanische Verdichtung gebildet wurden, sind sie zudem viel leichter löslich als mittels gezielter Granulierung oder Kompaktierung erzeugte Körner. Auch aufgrund dessen ist die erfindungsgemäße Düngemittelmischung sehr reaktiv, wobei sie gleichzeitig staubarm ist und nicht so schnell ausgewaschen wird.

Sofern keine zusätzliche Wasserzugabe erfolgt, sind zudem keine Dosiereinrichtungen für Flüssigkeiten erforderlich, was die Vorrichtung und das Verfahren erheblich vereinfacht und kostengünstiger macht. Es können somit Apparate und Verfahrenstechnik verwendet werden, die an Standorten mit Kalkstein- und Dolomitproduktion gebräuchlich sind.

Bei Verwendung von Grünsalz aus der Titandioxidherstellung werden zudem zusätzlich wichtige Mikronährstoffe (z.B. Mn, Zn) in die Düngemittelmischung automatisch mit eingebracht.

Die Erfindung vermeidet somit die Nachteile von reinem Kalksteinmehl (stark staubend, Ca nur schwer löslich, kein Schwefel), reinem Gips (keine alkalische Wirkung) und reinem Eisensulfat (stark sauer).

Durch Wahl der Mischungsverhältnisse der Feststoffkomponenten, insbesondere der Eisensalz-Feststoffkomponente, des Gipses, des Elementarschwefels und der CaCO₃ und/oder CaMg(CO₃)₂-Feststoffkomponente, insbesondere des Kalksteinmehls und/oder Dolomitmehls, lassen sich eine breite Palette von Kalk-Schwefel-Düngemittelmischungen mit unterschiedlichem S-Gehalt, unterschiedlicher Basizität und unterschiedlicher Pflanzenverfügbarkeit des Schwefels herstellen. Zusätze von Bor oder anderen Mikronährstoffen erhöhen die Anwendbarkeit dieser Technologie weiter.

Insbesondere kann die Menge an der CaCO₃ und/oder CaMg(CO₃)₂-Feststoffkomponente, insbesondere des Kalksteinmehls und/oder Dolomitmehls, derart bemessen werden, dass die Düngemittelmischungen einen sauren Charakter aufweisen und für die Düngung von Eisen und/oder Schwefel auf alkalischen Böden eingesetzt werden können.

Diese große Vielseitigkeit der Produkteigenschaften bei gleichzeitiger Nutzung einer an vielen Orten bestehenden Produktionstechnik (Mahlung von Kalkstein bzw. Dolomit) ermöglicht eine breite und schnelle Anwendung des erfindungsgemäßen Verfahrens.

Die erfindungsgemäße Düngemittelmischung zeigt zudem eine deutlich geringere Auswaschbarkeit als andere Schwefeldüngungsmittel wie z.B. Kaliumsulfat und Magnesiumsulfat. Aufgrund dessen wird eine Langzeitverfügbarkeit von Schwefel und Calcium erreicht und dadurch Pflanzenwachstum und Bodenstruktur verbessert.

Die Lösekinetik bzw. die Auswaschbarkeit der erfindungsgemäßen Düngemittelmischung kann dabei durch eine thermische Behandlung und/oder durch Mahlung weiter reduziert werden, indem das gebildete Calciumsulfat in Anhydrit umgewandelt wird. Auf diese Weise kann die Auswaschung im Boden durch Niederschläge weiter verlangsamt werden.

Im Rahmen liegt es dabei auch, dass die erfindungsgemäße Düngemittelmischung nicht in körniger Form vorliegt, sondern beispielsweise breiig oder flüssig. Dann ist das Staubproblem vollständig beseitigt. U.a. aus Transport- und Ausbringungsgründen ist aber die körnige Form bevorzugt.

Zudem ist erwähnt worden, dass die Eisensalz-Komponente auch in flüssiger Form vorliegen kann. Auch hier ist die körnige Form allerdings bevorzugt.

### Beispiel 5:

100 kg Eisensulfat-Heptahydrat, welches als Nebenprodukt bei der Herstellung von Titandioxid anfällt und durch längere Lagerung zahlreiche Agglomerate enthält, die zwischen 2 und 30 cm Durchmesser aufweisen, wird zunächst mit 20 kg Kalksteinmehl und 5,6 kg CaO vermischt, wodurch die Temperatur auf etwa 70 C steigt.

Anschließend werden 470 kg Kalksteinmehl zugemischt, so dass sich eine homogene, staubarme Zubereitung mit 2% S ohne Grobanteile ergibt.

### Beispiel 6:

Eine erfindungsgemäße Düngemittelmischung mit 1,96% S, 0,2 Gew.-% Al (gerechnet als Al2O3), 3,8 % Fe und einem Neutralisationswert von 45 (nach DIN EN 12945:2014 Verfahren A) wurde durch Vermischen von 1 Teil Eisensulfat-Heptahydrat (Grünsalz, Nebenprodukt aus der TiO2-Herstellung) und 5 Teilen feingemahlenem Kalksteinmehl (KSM 60/3 der Fels-Werke GmbH) entsprechend Beispiel 1, Absatz 1 hergestellt.

Mit dieser Düngemittelmischung sowie als Referenz mit dem unbehandelten feingemahlenen Kalksteinmehl (KSM 60/3) wurde ein Freiland-Düngeversuch mit Winterraps (Sorte "Sherpa") auf einer Braunerde mit Terassensanden des Rheins mit Ackerzahlen zwischen 25 und 35 in der Nähe von Speyer durchgeführt.

Die Ausbringung der erfindungsgemäßen Düngemittelmischung und des feingemahlenen Kalksteinmehls (KSM 60/3) erfolgte vor der Aussaat durch Aufstreuen auf den Versuchsflächen. Eine Herbstdüngung von Stickstoff erfolgte jeweils in Form von Kalkammonsalpeter (KAS).

Die erste Frühjahrsdüngung von Stickstoff erfolgte mit Kalkammonsalpeter (KAS) bzw. Ammonsulfatsalpeter (ASS) für den Referenzversuch.

Eine zweite Frühjahrsdüngung von Stickstoff erfolgte jeweils in Form von Kalkammonsalpeter (KAS).

Mit Ausnahme der in untenstehender Tabelle aufgelisteten Unterschiede wurden alle anderen Maßnahmen bzw. Zugaben wie z.B. Kalium, Phosphor und Pflanzenschutzmittel bei beiden Varianten identisch vorgenommen.

| | Erfindungsgemäße Düngemittelmischung | Referenzversuch mit KSM 60/3 |
|---|---|---|
| Ausgebrachte Menge | 3000 kg/ha | 2430 kg/ha |
| CaO-Äquivalent | 1350 kg/ha | 1350 kg/ha |
| Menge Schwefel (als S) | 58,8 kg/ha | 0 |
| N-Düngung (Herbst) | 50 kg N / ha | 50 kg N / ha |
| | (Kalkammonsalpeter) | (Kalkammonsalpeter) |
| 1. N-Düngung (Frühjahr) | 120 kg N / ha | 120 kg N / ha |
| | (Kalkammonsalpeter) | (Ammonsulfatsalpeter,) |
| Menge Schwefel (als S) | 0 | 60 kg/ha |
| 2. N-Düngung (Frühjahr) | 50 kg N / ha | 50 kg N / ha |
| | (Kalkammonsalpeter) | (Kalkammonsalpeter) |
| **Kornertrag** | **2,76 t / ha** | **2,61 t / ha** |
| **Ölertrag** | **1,10 t / ha** | **1,02 t / ha** |
| | (jeweils Mittelwerte aus 4 Versuchen) | (jeweils Mittelwerte aus 4 Versuchen) |

Der Kornertrag bei Verwendung der erfindungsgemäßen Düngemittelmischung (mit Ausbringung von S im Herbst) liegt um knapp 6% höher als beim Vergleichsversuch (mit Ausbringung von S im Frühjahr). Beim Ölertrag zeigt die erfindungsgemäßen Düngemittelmischung einen Vorteil von knapp 8%.

Es zeigt sich weiterhin, dass bei Verwendung der erfindungsgemäßen Düngemittelmischung auf die Verwendung von S-haltigen Stickstoffdüngemitteln komplett verzichtet werden kann. Dies bedeutet eine erhebliche Kostenersparnis.

### Beispiel 7:

Eine erfindungsgemäße Düngemittelmischung mit 1,96% S, 0,2 Gew.-% Al (gerechnet als Al2O3), 3,8 % Fe und einem Neutralisationswert von 45 (nach DIN EN 12945:2014 Verfahren A) wurde durch Vermischen von 5 t Eisensulfat-Heptahydrat (Grünsalz, Nebenprodukt aus der TiO2-Herstellung) und 25 t feingemahlenem Kalksteinmehl (KSM 60/3 der Fels-Werke GmbH) entsprechend Beispiel 1, Absatz 1, hergestellt.

Der anschließende Transport zum Ort der Verwendung erfolgte als Schüttgut auf einem Kipper-LKW mit offener Ladefläche, wobei die Düngemittelmischung mit einer Plane abgedeckt wurde.

Im Gegensatz hierzu muss der Transport des Kalksteinmehls zum Ort der Vermischung mit einem Silo-LKW erfolgen, da ein Transport des Kalksteinmehls auf einer offenen Ladefläche auch bei Verwendung einer Plane mit einer deutlichen Staubbelastung verbunden ist.

### Beispiel 8:

Kalksteinmehl-Grünsalz-Gemische (Charakterisierung der Komponenten wie in Beispiel 1 beschrieben) werden frisch hergestellt (wie in Beispiel 1 beschrieben) und 1 h an Luft gelagert.

Eine Acrylglasröhre (Länge 300 mm, Durchmesser innen 24 mm) wird vertikal ausgerichtet und unten mit einem überstehenden Polster aus luftdurchlässigem Schaumstoff verschlossen. In einer Höhe von 100 mm oberhalb des Polsters ist ein horizontal durch den Röhrenquerschnitt verlaufender 1 mm starker Draht angeordnet. In die Röhre wird eine Probe von genau 20 g des Kalksteinmehls bzw. Kalksteinmehl-Grünsalz-Gemischs eingefüllt, die als Schüttung unten auf dem Polster ruht. Oben wird die Röhre mit einem durchbohrten Stopfen verschlossen, daran angeschlossen ein Vakuum-Gummischlauch (Durchmesser innen 8 mm), der über zwei in Serie geschaltete laborübliche gläserne Gaswaschflaschen zu einer Membran-Vakuumpumpe geführt wird.

Volumen 250 cm³ (Waschflasche I) bzw. 100 cm³ (Waschflasche II), gefüllt mit 100 g (I) bzw. 50 g (II) dest. Wasser, genau eingewogen).

### Prüfablauf:

Mit Einschalten der Vakuumpumpe wird Luft durch das Polster in die Röhre gesaugt und nach oben geführt. Die Luft-Förderleistung der Pumpe ist dabei auf 20 L/min eingestellt, so dass die Strömungsgeschwindigkeit in der Röhre 0,74 m/s beträgt. Der Luftstrom wirbelt die in Ruhe ca. 6 cm hohe Schüttung permanent auf eine Höhe von 12...18 cm auf, wobei der quer eingebaute Draht das Ansaugen eines Pulverpfropfens nach oben verhindert. Der Saugluftstrom überführt sehr feine Partikel sichtbar in eine Staubphase, welche die Röhre bis zum oberen Ende erfüllt. Die Partikel werden oben aus der Röhre abgesaugt und in den beiden Gaswaschflaschen im Wasser niedergeschlagen. Nach einer Laufzeit der Vakuumpumpe von genau 1 min wird die Durchströmung beendet und die Masse der abgesaugten Staubpartikel durch Wägung der Waschflachen-Inhalte bestimmt. Jede Probe wird mit diesem Ablauf in Doppelbestimmung geprüft.

Die Masse des unter diesen konstanten Bedingungen abgesaugten Staubs kann als relatives Maß für die Staubungsneigung des jeweiligen Materials angesehen werden.

Bei einer Prüfzeit von 1 min werden folgende Ergebnisse erhalten:

| Nr. | Anteil KSM / % | Anteil GS / % | Anteil abgesaugter Staub / % Vers. 1 | Anteil abgesaugter Staub / % Vers. 2 | Anteil abgesaugter Staub / % Vers. Ø |
|---|---|---|---|---|---|
| GS1.1 | 100 | 0 | 13,55 | 13,70 | 13,63 |
| GS2.1 | 97 | 3 | 8,00 | 7,60 | 7,80 |
| GS3.1 | 95 | 5 | 8,00 | 7,95 | 7,98 |
| GS4.1 | 90 | 10 | 6,30 | 6,30 | 6,30 |
| GS5.1 | 83,3 | 16,7 | 0,15 | 0,20 | 0,18 |
| GS6.1 | 80 | 20 | 0,25 | 0,45 | 0,35 |
| GS7.1 | 70 | 30 | 0 | 0 | 0 |
| GS8.1 | 60 | 40 | 0 | 0 | 0 |
| GS9.1 | 50 | 50 | 0 | 0 | 0 |

Bereits mit 3 % Grünsalz-Zusatz wird eine Reduzierung der nach diesem Verfahren ermittelten Staubmasse um 43 % erreicht. Ab einem Grünsalz-Zusatz von 16,7 % liegt der unter diesen Bedingungen festgestellte Staubanteil bei nahezu Null.

## Patentansprüche

1. Rieselfähige bzw. körnige Düngemittelmischung, welche Calcium- und/oder Magnesiumcarbonat, Schwefelverbindungen und Eisenhydroxid- und/oder Eisenoxihydroxidverbindungen, enthält, **dadurch gekennzeichnet, dass**
der Neutralisationswert (als CaO) der Düngemittelmischung mindestens 20 beträgt, und
die Düngemittelmischung, bezogen auf ihre durch Trocknung bei 50°C auf Gewichtskonstanz, mindestens aber für 24 h, bestimmte Trockenmasse,
a) einen Aluminiumgehalt von < 3,6 Gew.-%, (gerechnet als Al₂O₃) und
b) einen Fe-Gehalt von 0,2 bis 9 Gew.-% aufweist, und
c) wobei der Schwefel zumindest teilweise in Sulfatform vorliegt.

2. Düngemittel nach Anspruch 1,
wobei
die Düngemittelmischung bezogen auf ihre durch Trocknung bei 50°C auf Gewichtskonstanz, mindestens aber für 24 h, bestimmte Trockenmasse einen Aluminiumgehalt von < 1,8 Gew.-%, bevorzugt < 0,8 Gew.-% (gerechnet als Al₂O₃) aufweist; und/oder
die Düngemittelmischung, bezogen auf ihre durch Trocknung bei 50°C auf Gewichtskonstanz, mindestens aber für 24 h, bestimmte Trockenmasse, einen Fe-Gehalt von 0,6 bis 6 Gew.-%, bevorzugt 1 bis 4 Gew.-% aufweist; und/oder
die Düngemittelmischung, bezogen auf ihre durch Trocknung bei 50°C auf Gewichtskonstanz, mindestens aber für 24 h, bestimmte Trockenmasse, einen Schwefelgehalt (als S) von 0,5 bis 20 Gew.-%, bevorzugt 1 bis 4 Gew.-%, aufweist; und/oder
die Düngemittelmischung ohne vorherige Trocknung folgende Kornverteilung bestimmt durch Trockensiebung gemäß DIN EN 12948:2011 mit einer Siebzeit von 3 Minuten aufweist (Anteile addieren sich zu 100 Gew.-%):
| **Korngröße** | **Anteile [Gew.-%**] | | |
|---|---|---|---|
| | | vorzugsweise | besonders bevorzugt |
| < 0,09 mm | <85 | 15 bis 70 | 15 bis 60 |
| 0,09 bis < 1 mm | 10 bis 100 | 20 bis 55 | 30 bis 55 |
| 1 bis < 8 mm | <25 | 4 bis 30 | 8 bis 30 |
| > 8 mm | <5 | 0 bis 5 | 0 bis 2 |

3. Düngemittel nach Anspruch 1 oder 2,
**dadurch gekennzeichnet, dass**
die Düngemittelmischung Schwefel in elementarer Form enthält.

4. Düngemittelmischung nach einem der vorhergehenden Ansprüche, **dadurch gekennzeichnet, dass**
die Düngemittelmischung eine Restfeuchte zwischen 1,5 und 16 Gew.-%, bevorzugt zwischen 2 und 13 Gew.-%, besonders bevorzugt zwischen 3 und 9 Gew.-%, aufweist.

5. Düngemittelmischung nach einem der vorhergehenden Ansprüche, **dadurch gekennzeichnet, dass**
der Neutralisationswert (als CaO) der Düngemittelmischung mindestens 42, bevorzugt mindestens 45, besonders bevorzugt 45 bis 56, beträgt.

6. Verfahren zur Herstellung einer Düngemittelmischung durch Mischen
a) einer CaCO₃ und/oder CaMg(CO₃)₂ enthaltenden, körnigen Feststoffkomponente, die einen Aluminiumgehalt von < 4 Gew.-%, (gerechnet als Al₂O₃), bezogen auf die Trockenmasse (bestimmt durch Trocknung bei 105°C), aufweist,
b) einer wasserlösliches Eisensalz, insbesondere Eisensulfat, enthaltenden Komponente,
c) gegebenenfalls Zugabewasser, und
d) gegebenenfalls weiterer flüssiger Komponenten und/oder körniger Feststoffkomponenten,
wobei die Mischung, bezogen auf ihre durch Trocknung bei 50°C auf Gewichtskonstanz, mindestens aber für 24 h bestimmte Trockenmasse, einen Gehalt an (Ca/Mg)CO₃ von ≥ 20 Gew.-% aufweist.

7. Verfahren nach Anspruch 6,
**dadurch gekennzeichnet, dass** es sich bei der CaCO₃ und/oder CaMg(CO₃)₂ enthaltenden Feststoffkomponente um natürlichen Kalkstein, insbesondere in Mehlform, und/oder natürlichen Dolomit, insbesondere in Mehlform, und/oder Kreide und/oder gefälltes Calciumcarbonat (PCC) und/oder gefälltes Calciummagnesiumcarbonat handelt.

8. Verfahren nach einem der Ansprüche 6 und 7, wobei eine Düngemittelmischung gemäß einem oder mehrerer der Ansprüche 1 bis 6 erhalten wird.

9. Verfahren, nach einem der Ansprüche 6 bis 8, zur Herstellung einer rieselfähigen bzw. körnigen Düngemittelmischung, insbesondere nach einem der Ansprüche 1 bis 8, durch Mischen
a) einer CaCO₃ und/oder CaMg(CO₃)₂ enthaltenden, körnigen, vorzugsweise mehlförmigen, Feststoffkomponente,
b) einer körnigen, wasserlösliches Eisensalz, insbesondere Eisensulfat, enthaltenden Feststoffkomponente,
c) gegebenenfalls Zugabewasser, und
d) gegebenenfalls weiterer flüssiger und/oder körniger Komponenten , **dadurch gekennzeichnet, dass**
die Eisensalz enthaltende Feststoffkomponente und die CaCO₃ und/oder CaMg(CO₃)₂ enthaltenden Feststoffkomponente, insbesondere das Kalksteinmehl und/oder das Dolomitmehl, zumindest zeitweise und/oder zumindest teilweise gemeinsam Vermahlen und dadurch miteinander vermischt werden, wobei vorzugsweise die Eisensalz enthaltende Feststoffkomponente am Ende der Mahlung zugegeben wird.

10. Verfahren, nach einem der vorhergehenden Ansprüche 6 bis 8, zur Herstellung einer, vorzugsweise rieselfähigen bzw. körnigen, Düngemittelmischung, insbesondere nach einem der Ansprüche 1 bis 8, durch Mischen
a) einer CaCO₃ und/oder CaMg(CO₃)₂ enthaltenden, körnigen, vorzugsweise mehlförmigen, Feststoffkomponente,
b) einer wasserlösliches Eisensalz, insbesondere Eisensulfat, enthaltenden Komponente,
c) gegebenenfalls Zugabewasser, und
d) gegebenenfalls weiterer flüssiger Komponenten und/oder körniger Feststoffkomponenten,
**dadurch gekennzeichnet, dass**
die Temperatur der Mischung während des Mischvorgangs erhöht wird, wobei die Mischung insbesondere auf eine Temperatur (im Innern der Mischung) von >55°C, bevorzugt 60 bis 120°C, besonders bevorzugt 70 bis 90°C gebracht oder temperiert wird.

11. Düngemittelmischung gemäß einem der Ansprüche 1 bis 5, herstellbar nach einem Verfahren nach einem der vorhergehenden Ansprüche 6 bis 10.

12. Verwendung der Düngemittelmischung gemäß einem der Ansprüche 1 bis 5 oder 11 als Düngemittel.

13. Verwendung gemäß Anspruch 12, wobei die Düngemittelmischung gemäß einem der Ansprüche 1 bis 5 oder 11 als schwefelhaltiges Düngemittel verwendet wird, und für die so mit Schwefel gedüngten Kulturen nur solche Stickstoff-Düngemittel verabreicht werden, welche ein S/N-Verhältnis von <0,2, bevorzugt <0,05, aufweisen, wobei besonders bevorzugt Kalkammonsalpeter oder Harnstoff verwendet werden.

14. Verfahren zum Düngen mit Schwefel, **dadurch gekennzeichnet, dass** die Düngemittelmischung gemäß einem der Ansprüche 1 bis 5 oder 11 in einer Menge ausgebracht wird, die 10 bis 250 kg S/ha, bevorzugt 10 bis 150 kg S/ha, besonders bevorzugt 30 bis 100 kg S/ha, entspricht, und weiterhin **dadurch gekennzeichnet, dass** für die so mit Schwefel gedüngten Kulturen nur solche Stickstoff-Düngemittel verabreicht werden, welche ein S/N-Verhältnis von <0,2, bevorzugt <0,05, aufweisen, wobei besonders bevorzugt Kalkammonsalpeter oder Harnstoff verwendet werden.

15. Verfahren zum Düngen mit Schwefel gemäß Anspruch 14, **dadurch gekennzeichnet, dass** der Anteil an Schwefel (als S) aus der Düngemittelmischung im Verhältnis zur gesamten Schwefelgabe (als S) für die so gedüngten Kulturen mindestens 30%, bevorzugt mindestens 50%, besonders bevorzugt mindestens 75%, beträgt.

## Claims

1. Pourable or granular fertiliser mixture containing calcium and/or magnesium carbonate, sulphur compounds and iron hydroxide and/or iron oxyhydroxide compounds,
**characterised in that**
the neutralisation value (as CaO) of the fertiliser mixture is at least 20, and
the fertiliser mixture has, relative to its dry mass determined by means of drying at 50°C to a constant weight, but at least for 24 h,
a) an aluminium content of < 3.6 wt.%, (expressed as Al₂O₃) and
b) an Fe content of 0.2 bis 9 wt.%, and
c) wherein at least some of the sulphur is in sulphate form.

2. Fertiliser according to claim 1,
wherein
the fertiliser mixture has, relative to its dry mass determined by means of drying at 50°C to a constant weight, but at least for 24 h, an aluminium content of < 1.8 wt.%, preferably < 0.8 wt.% (expressed as Al₂O₃); and/or
the fertiliser mixture has, relative to its dry mass determined by means of drying at 50°C to a constant weight, but at least for 24 h, an Fe content of 0.6 to 6 wt.%, preferably 1 to 4 wt.%; and/or
the fertiliser mixture has, relative to its dry mass determined by means of drying at 50°C to a constant weight, but at least for 24 h, a sulphur content (as S) of 0.5 to 20 wt.%, preferably 1 to 4 wt.%; and/or
the fertiliser mixture has the following grain size distribution without previous drying determined by means of dry sieving according to DIN EN 12948:2011 with a sieving time of 3 minutes (proportions add up to 100 wt.%):
| Grain size | Proportions [wt.%] | | |
|---|---|---|---|
| | | Preferably | Particularly preferably |
| < 0.09 mm | <85 | 15 to 70 | 15 to 60 |
| 0.09 to < 1 mm | 10 to 100 | 20 to 55 | 30 to 55 |
| 1 to < 8 mm | <25 | 4 to 30 | 8 to 30 |
| > 8 mm | < 5 | 0 to 5 | 0 to 2 |

3. Fertiliser according to claim 1 or 2, **characterised in that**
the fertiliser mixture contains sulphur in elemental form.

4. Fertiliser mixture according to any of the preceding claims,
**characterised in that**
the fertiliser mixture has a residual moisture content of between 1.5 and 16 wt.%, preferably between 2 and 13 wt.%, particularly preferably between 3 and 9 wt.%.

5. Fertiliser mixture according to any of the preceding claims,
**characterised in that**
the neutralisation value (as CaO) of the fertiliser mixture is at least 42, preferably at least 45, particularly preferably 45 to 56.

6. Method for producing a fertiliser mixture by mixing
a) a granular solid component containing CaCO₃ and/or CaMg(CO₃)₂ and having an aluminium content of < 4 wt.%(expressed as Al₂O₃) relative to the dry mass (determined by means of drying at 105°C),
d) a component containing water-soluble iron salt, in particular iron sulphate,
e) optionally added water, and
f) optionally other liquid components and/or granular solid components,
wherein the mixture has, relative to its dry mass determined by means of drying at 50°C to a constant weight, but at least for 24 h, a content of (Ca/Mg)CO₃ of ≥ 20 wt.%.

7. Method according to claim 6,
**characterised in that**
the solid component containing CaCO₃ and/or CaMg(CO₃)₂ is natural limestone, in particular in powder form, and/or natural dolomite, in particular in powder form, and/or chalk and/or precipitated calcium carbonate (PCC) and/or precipitated calcium magnesium carbonate.

8. Method according to any of claims 6 and 7, wherein a fertiliser mixture according to one or more of claims 1 to 6 is obtained.

9. Method according to any of claims 6 to 8 for producing a pourable or granular fertiliser mixture, in particular according to any of claims 1 to 8, by mixing
a) a granular, preferably powdered, solid component containing CaCO₃ and/or CaMg(CO₃)₂,
g) a solid component containing granular, water-soluble iron salt, in particular iron sulphate,
h) optionally added water, and
i) optionally other liquid and/or granular components,
**characterised in that**
the solid component containing iron salt and the solid component containing CaCO₃ and/or CaMg(CO₃)₂, in particular the limestone powder and/or the dolomite powder, are ground at least temporarily and/or at least partially together and thus mixed with one another, wherein the solid component containing iron salt is preferably added at the end of grinding.

10. Method according to any of the preceding claims 6 to 8 for producing a preferably pourable or granular fertiliser mixture, in particular according to any of claims 1 to 8, by mixing
a) a granular, preferably powdered, solid component containing CaCO₃ and/or CaMg(CO₃)₂,
b) a component containing water-soluble iron salt, in particular iron sulphate,
c) optionally added water, and
d) optionally other liquid components and/or granular solid components,
**characterised in that**
the temperature of the mixture during the mixing process is increased, wherein the mixture is in particular brought or controlled to a temperature (inside the mixture) of > 55°C, preferably 60 to 120°C, particularly preferably 70 to 90°C.

11. Fertiliser mixture according to any of claims 1 to 5 that can be produced according to a method according to any of the preceding claims 6 to 10.

12. Use of the fertiliser mixture according to any of claims 1 to 5 or 11 as a fertiliser.

13. Use according to claim 12, wherein the fertiliser mixture according to any of claims 1 to 5 or 11 is used as a sulphurous fertiliser, and only nitrogen fertilisers that have an S/N ratio of < 0.2, preferably < 0.05, are applied for the crops fertilised with sulphur in this way, wherein, particularly preferably, calcium ammonium nitrate or urea are used.

14. Method for fertilising with sulphur, **characterised in that** the fertiliser mixture according to any of claims 1 to 5 or 11 is applied in an amount corresponding to 10 to 250 kg S/ha, preferably 10 to 150 kg S/ha, particularly preferably 30 to 100 kg S/ha, and further **characterised in that** only nitrogen fertilisers that have an S/N ratio of < 0.2, preferably < 0.05, are applied for the crops fertilised with sulphur in this way, wherein, particularly preferably, calcium ammonium nitrate or urea are used.

15. Method for fertilising with sulphur according to claim 14, **characterised in that** the proportion of sulphur (as S) from the fertiliser mixture is at least 30%, preferably at least 50%, particularly preferably at least 75% in relation to the total sulphur applied (as S) for the crops fertilised in this way.

## Revendications

1. Mélange d'engrais coulant ou granulaire, lequel contient du carbonate de calcium et/ou de magnésium, des composés de soufre et des composés d'hydroxyde de fer et/ou d'oxyhydroxyde de fer,
**caractérisé en ce que**
la valeur de neutralisation (sous forme de CaO) du mélange d'engrais est d'au moins 20, et
le mélange d'engrais présente, par rapport à sa matière sèche déterminée par séchage à 50 °C à poids constant, mais au moins pendant 24 h,
a) une teneur en aluminium < 3,6 % en poids (calculée sous forme Al₂O₃), et
b) présente une teneur en Fe allant de 0,2 à 9 % en poids, et
c) dans lequel le soufre existe au moins en partie sous la forme de sulfate.

2. Engrais selon la revendication 1,
dans lequel
le mélange d'engrais par rapport à sa matière sèche déterminée par séchage à 50 °C à poids constant, mais au moins pendant 24 h, présente une teneur en aluminium < 1,8 % en poids, de préférence < 0,8 % en poids (calculée sous forme Al₂O₃) ; et/ou
le mélange d'engrais, par rapport à sa matière sèche déterminée par séchage à 50 °C à poids constant, mais au moins pendant 24 h, présente une teneur en Fe allant de 0,6 à 6 % en poids, de préférence de 1 à 4 % en poids ; et/ou
le mélange d'engrais, par rapport à sa matière sèche déterminée par séchage à 50 °C à poids constant, mais au moins pendant 24 h, présente une teneur en soufre (sous forme S) allant de 0,5 à 20 % en poids, de préférence de 1 à 4 % en poids ; et/ou
le mélange d'engrais sans séchage préalable présente la répartition granulométrique suivante déterminée par tamisage par voie sèche conformément à la norme DIN EN 12948:2011 avec un temps de tamisage de 3 minutes (les parties sont additionnées à 100 % en poids) :
| **Taille des grains** | **Parties [% en poids]** | | |
|---|---|---|---|
| | | de préférence | dLe plus préférentiellement |
| < 0,09 mm | < 85 | De 15 à 70 | De 15 à 60 |
| De 0,09 à < 1 mm | De 10 à 100 | De 20 à 55 | De 30 à 55 |
| De 1 à < 8 mm | < 25 | De 4 à 30 | De 8 à 30 |
| >8mm | <5 | De 0 à 5 | De 0 à 2 |

3. Engrais selon la revendication 1 ou 2,
**caractérisé en ce que**
le mélange d'engrais contient du soufre sous forme élémentaire.

4. Mélange d'engrais selon l'une quelconque des revendications précédentes, **caractérisé en ce que**
le mélange d'engrais présente une humidité résiduelle comprise entre 1,5 et 16 % en poids, de préférence entre 2 et 13 % en poids, le plus préférentiellement entre 3 et 9 % en poids.

5. Mélange d'engrais selon l'une quelconque des revendications précédentes, **caractérisé en ce que**
la valeur de neutralisation (sous forme de CaO) du mélange d'engrais est d'au moins 42, de préférence d'au moins 45, le plus préférentiellement de 45 à 56.

6. Procédé de préparation d'un mélange d'engrais en mélangeant
a) un composant solide granulaire contenant du CaCO₃ et/ou du CaMg(CO₃)₂, qui présente une teneur en aluminium < 4 % en poids, (calculée sous forme de Al₂O₃), par rapport à la matière sèche (déterminée par séchage à 105 °C),
b) un composant contenant du sel de fer hydrosoluble, en particulier du sulfate de fer,
c) le cas échéant en ajoutant de l'eau, et
d) le cas échéant d'autres composants liquides et/ou composants solides granulaires,
dans lequel le mélange, par rapport à sa matière sèche déterminée par séchage à 50 °C à poids constant, mais au moins pendant 24 h, présente une teneur en (Ca/Mg)CO₃ ≥ 20 % en poids.

7. Procédé selon la revendication 6,
**caractérisé en ce qu'**
il s'agit pour le composant solide contenant du CaCO₃ et/ou CaMg(CO₃)₂ de calcaire naturel, en particulier sous forme de farine, et/ou de dolomite naturel, en particulier sous forme de farine et/ou de craie et/ou de carbonate de calcium précipité (PCC) et/ou de carbonate de magnésium et de calcium précipité.

8. Procédé selon l'une quelconque des revendications 6 et 7, dans lequel un mélange d'engrais est obtenu conformément à une quelconque ou plusieurs des revendications 1 à 6.

9. Procédé selon l'une quelconque des revendications 6 à 8, pour la préparation d'un mélange d'engrais coulant ou granulaire, en particulier selon l'une quelconque des revendications 1 à 8, en mélangeant
a) un composant solide granulaire, de préférence sous forme de farine, contenant du CaCO₃ et/ou CaMg(CO₃)₂,
b) un composant solide granulaire contenant du sel de fer hydrosoluble, en particulier du sulfate de fer,
c) le cas échéant en ajoutant de l'eau, et
d) le cas échéant d'autres composants liquides et/ou granulaires,
**caractérisé en ce que**
le composant solide contenant du sel de fer et le composant solide contenant du CaCO₃ et/ou du CaMg(CO₃)₂, en particulier le calcaire en poudre et/ou la dolomite en poudre, broyés ensemble au moins temporairement et/ou au moins partiellement et sont ainsi mélangés les uns avec les autres, dans lequel de préférence le composant solide contenant du sel de fer est ajouté à la fin du broyage.

10. Procédé selon l'une quelconque des revendications précédentes 6 à 8, pour la préparation d'un mélange d'engrais de préférence coulant ou granulaire, en particulier selon l'une quelconque des revendications 1 à 8, en mélangeant
a) un composant solide granulaire, de préférence sous forme de farine, contenant du CaCO₃ et/ou CaMg(CO₃)₂,
b) un composant contenant du sel de fer hydrosoluble, en particulier du sulfate de fer,
c) le cas échéant en ajoutant de l'eau, et
d) le cas échéant d'autres composants liquides et/ou composants solides granulaires,
**caractérisé en ce que**
la température du mélange est augmentée pendant le processus de mélange, dans lequel le mélange est amené ou tempéré en particulier à une température (à l'intérieur du mélange) >55°C, de préférence de 60 à 120 °C, le plus préférentiellement de 70 à 90 °C.

11. Mélange d'engrais conformément à l'une quelconque des revendications 1 à 5, pouvant être préparé selon l'un quelconque des procédés selon l'une quelconque des revendications 6 à 10.

12. Utilisation du mélange d'engrais conformément à l'une quelconque des revendications 1 à 5 ou 11 comme engrais.

13. Utilisation selon la revendication 12, dans lequel le mélange d'engrais conformément à l'une quelconque des revendications 1 à 5 ou 11 est utilisé comme engrais contenant du soufre, et pour les cultures fertilisées ainsi en soufre seuls de tels engrais azotés sont administrés, lesquels présentent un rapport S/N < 0,2, de préférence < 0,05, dans lequel le plus préférentiellement du nitrate d'ammonium calcaire ou de l'urée est utilisé(e).

14. Procédé pour fertiliser avec du soufre, **caractérisé en ce que** le mélange d'engrais conformément à l'une quelconque des revendications 1 à 5 ou 11 est épandu selon une quantité qui correspond à 10 à 250 kg de S/ha, de préférence à 10 à 150 kg de S/ha, le plus préférentiellement à 30 à 100 kg de S/ha, et **caractérisé en outre en ce que**, pour les cultures ainsi fertilisées avec du soufre, seuls de tels engrais azotés sont administrés, lesquels présentent un rapport S/N < 0,2, de préférence < 0,05, dans lequel le plus préférentiellement du nitrate d'ammonium calcaire ou de l'urée est utilisé(e).

15. Procédé pour fertiliser avec du soufre conformément à la revendication 14, **caractérisé en ce que** la part de soufre (sous forme S) provenant du mélange d'engrais est, par rapport à l'ajout total de soufre (sous forme S) pour les cultures ainsi fertilisées, d'au moins 30 %, de préférence d'au moins 50 %, le plus préférentiellement d'au moins 75 %.
